# EUROPEAN PATENT SPECIFICATION

(11) **EP 4 488 139 B1**
(45) Date of publication and mention of the grant of the patent: **25.11.2026**
(21) Application number: 22932678.0
(22) Date of filing: 24.03.2022
(51) Int. Cl.: B60W 50/14, G08G 1/16, B60K 35/22, B60K 35/23, B60K 35/235, B60K 35/29, B60K 35/81, B60K 35/40

(54) **DISPLAY APPARATUS CONTROLLING METHOD AND APPARATUS, AND VEHICLE**
ANZEIGEVORRICHTUNGSTEUERUNGSVERFAHREN UND -VORRICHTUNG SOWIE FAHRZEUG
PROCÉDÉ ET APPAREIL DE COMMANDE D'APPAREIL D'AFFICHAGE, ET VÉHICULE

(43) Date of publication of application: 08.01.2025
(73) Proprietor: Yinwang Intelligent Technologies Co., Ltd., Shenzhen, Guangdong 518129 (CN)
(72) Inventor: LI, Huayu, Shenzhen, Guangdong 518129 (CN); ZHOU, Jin, Shenzhen, Guangdong 518129 (CN); SONG, Xianxi, Shenzhen, Guangdong 518129 (CN)
(74) Representative: Gill Jennings & Every LLP
(86) International application number: PCT/CN2022/082816
(87) International publication number: WO 2023/178613

(56) References cited:
- CN-A- 107 867 242
- CN-A- 110 914 882
- CN-U- 204 821 176
- DE-U1- 202017 007 263
- JP-A- 2009 237 649
- JP-A- 2021 105 989
- US-A1- 2017 313 192
- US-A1- 2019 392 780
- US-A1- 2021 357 669

## Description

### TECHNICAL FIELD

Embodiments of this application relate to the field of intelligent vehicles, and more specifically, to a method and an apparatus for display apparatus control.

### BACKGROUND

A navigation display system is one of the most important application systems in the automobile field. The system can provide assistance for correct driving of a driver. Currently, apparatuses such as a mobile phone screen, a vehicle-mounted central display, a head-up display (head-up display, HUD), and a digital light processing (digital light processing, DLP) projector are usually used for navigation display.

However, to view navigation information on the central display or the mobile phone screen, the driver needs to turn the head. This may affect a driving status of the driver in a driving process. In complex road conditions, for example, a distance from a vehicle in front is short, a road surface is uneven, or there is an obvious height difference, a DLP projection effect is poor, resulting in poor user experience. Glare of the HUD may affect normal driving of the driver.

Therefore, when navigation information is displayed on a display apparatus of a vehicle, how to improve user experience becomes an urgent problem to be resolved. US2017/313192A1 disclosed a vehicle display device for displaying information used to vehicle driving. DE202017007263U1 discloses vehicle arrangements for protecting a driver from glare caused by reflections.

### SUMMARY

Embodiments of this application provide a method and an apparatus for display apparatus control, and a vehicle, so that a display apparatus can be selected or switched to based on environment information, a real-time driving status of a vehicle, and the like. This helps improve driving experience and driving safety of a user.

The vehicle in this application may include one or more different types of transportation tools or movable objects that operate or move on land (for example, a highway, a street, or a railway), on water (for example, a waterway, a river, or an ocean), or in air. For example, the vehicle may include a car, a bicycle, a motorcycle, a train, a subway, an airplane, a ship, a plane, a robot, or another type of transportation tool or movable object. Alternatively, the vehicle may be a transportation facility. This is not specifically limited in embodiments of this application.

According to a first aspect, a method for display apparatus control is provided. The method may be performed by a vehicle, or may be performed by a vehicle-mounted terminal like a head unit of the vehicle, or may be performed by a chip or a circuit used for the vehicle. This is not limited in this application. For ease of description, in the following descriptions, an example in which the method is performed by the vehicle is used.

The method includes: obtaining display effect information of a vehicle, where the display effect information includes information that affects display effects of at least two display apparatuses, and the vehicle includes the at least two display apparatuses; determining a first display apparatus from the at least two display apparatuses based on the display effect information; and controlling the first display apparatus to enter a display preparation state, or controlling the first display apparatus to display information required for driving.

According to the foregoing technical solutions, the apparatus for displaying the information required for driving is determined based on the information that affects the display effects of the display apparatuses, so as to control the apparatus to display the information required for driving or control the apparatus to prepare for display. This improves comfort of a driver and safety in a driving process.

Specifically, the display effect information may include information about an ambient environment of the vehicle and vehicle driving status information. For example, the environment information includes at least one of the following: a luminous intensity, a road surface condition, a road scenario, a current weather condition, an obstacle location, and a distance between an obstacle and the vehicle. The vehicle driving status information includes at least one of the following: a real-time vehicle speed (for example, a driving speed value), a vehicle turning status (for example, a steering wheel angle of the vehicle), and a real-time vehicle tilt status (for example, an angle between the vehicle and a horizontal plane). In some possible implementations, the display effect information may further include other information that affects the display effects of the display apparatuses.

Further, the display effect information may also include a corresponding parameter determined based on the environment information and the real-time status information of the vehicle. For example, the display effect information may also include road surface flatness determined based on a road surface condition obtained by a sensor.

For example, the display preparation state may include the following states: The display apparatus is powered on; the display apparatus enters an awake state; a sensing capability of a sensor required for operation of the display apparatus is woken up; and another function required by the display apparatus for display is woken up.

For example, the information required for driving includes but is not limited to: navigation information, for example, a driving route planned based on a destination, a distance to a nearest intersection, a driving rule of a lane, a current vehicle speed, a road speed limit regulation, an obstacle avoidance reminder, and obstacle avoidance route planning; visual information required for operation of the driver, for example, whether there is a special site (for example, an intersection) on a road and a location of the site, a road surface condition (for example, whether there is a defect or damage), and a peripheral facility condition of a road, and a width, a line type, and a structure of a road; and other information that needs to be noted in the driving process.

In some possible implementations, after being started, the vehicle automatically obtains the display effect information, and then determines the first display apparatus; or after receiving a navigation start instruction, the vehicle obtains the display effect information, and then determines the first display apparatus. A moment at which the vehicle receives the navigation start instruction may be a moment in a driving process of the vehicle, or may be a moment between start of the vehicle and driving of the vehicle. This is not specifically limited in this embodiment of this application.

In some possible implementations, the at least two display apparatuses include a HUD and a vehicle-mounted projection light, and the determining a first display apparatus from the at least two display apparatuses based on the display effect information may be:
determining the first display apparatus based on the luminous intensity, where for example, when the luminous intensity is less than or equal to a preset threshold, the first display apparatus is the vehicle-mounted projection light, and for example, the preset threshold may be 5 lux (luminance, lux) or 10 lux, or may be another value;
determining the first display apparatus based on a current weather condition, where for example, for a rainy day, the first display apparatus is the HUD;
determining the first display apparatus based on the road surface flatness, where for example, the first display apparatus is the HUD when a road surface flatness level is less than or equal to a preset threshold;
determining the first display apparatus based on the road surface condition, where for example, the first display apparatus is the vehicle-mounted projection light when the road surface condition is a dirt road or a sandstone road; or
determining the first display apparatus based on the distance between the obstacle and the vehicle, where for example, when the distance between the obstacle and the vehicle is less than or equal to a preset threshold, the first display apparatus is the HUD; and for example, the preset threshold may be 5 meters (meter, m) or 10 m, or may be another value.

With reference to the first aspect, the method further includes: determining a display effect coefficient of the first display apparatus based on the display effect information, where the display effect coefficient indicates a degree of impact of the display effect information on a display effect of the first display apparatus; and determining the first display apparatus from the at least two display apparatuses when the display effect coefficient is less than or equal to a first threshold.

In some possible implementations, the display effect information includes the environment information, and determining the display effect of the first display apparatus based on the display effect information may be specifically: determining a corresponding parameter based on each piece of environment information, determining a weight of each parameter based on impact of each piece of environment information on the display effect, and determining the display effect coefficient based on each parameter and the weight of the parameter. It should be understood that a manner of calculating the display effect coefficient may be linear or non-linear. This is not specifically limited in this application. The display effect coefficient is a dimensionless quantity, and may be specifically any real number between 0 and 1.

For example, a luminous intensity parameter is R1, and a weight of R1 is 0.9; and a road surface flatness parameter is R2, and a weight of R2 is 0.5. The display effect coefficient is P = R1*0.9 + R2*0.5.

In some possible implementations, the display effect information further includes the vehicle driving status information. For example, if a vehicle speed parameter is R3, and a weight of the vehicle speed parameter is 0.4, the display effect coefficient P = R1*0.9 + R2*0.5 + R3*0.4 determined based on the luminous intensity parameter and the road surface flatness coefficient.

In some possible implementations, the first threshold may be a system default threshold. Specifically, the first threshold may be a threshold set by a driver based on a personal habit, or may be a threshold determined by performing statistics collection based on a result fed back by a user, or may be determined in another manner. This is not specifically limited in this application.

For example, the first threshold may be 0.5, 0.6, or another value.

In some possible implementations, various pieces of information in the display effect information differently affect display effects of different display apparatuses. Therefore, for each display apparatus, a method for determining the display effect coefficient is different. More specifically, for different display apparatuses, in the formula for determining the display effect coefficient, each parameter corresponds to a different weight. Further, different display apparatuses correspond to different preset thresholds. In some possible implementations, for each display apparatus, whether the display effect coefficient is less than or equal to a preset threshold is separately determined. For example, the at least two display apparatuses include a first display apparatus, a second display apparatus, and a third display apparatus. The first display effect coefficient is used to describe impact of the display effect information on a display effect of the first display apparatus. A second display effect coefficient is used to describe impact of the display effect information on a display effect of the second display apparatus. A third display effect coefficient is used to describe impact of the display effect information on a display effect of the third display apparatus. Further, when it is determined that the first display effect coefficient is less than or equal to a first preset threshold, the first display apparatus is determined from the at least two display apparatuses; when it is determined that the second display effect coefficient is less than or equal to a second preset threshold, the second display apparatus is determined from the at least two display apparatuses; and when it is determined that the third display effect coefficient is less than or equal to a third preset threshold, the third display apparatus is determined from the at least two display apparatuses. In some possible implementations, when display effect coefficients of the two or more display apparatuses are all less than or equal to a preset threshold, the two or more display apparatuses may be controlled to simultaneously display the information required for driving, or the two or more display apparatuses are controlled to simultaneously enter corresponding display preparation states.

In some possible implementations, one display apparatus may be determined from the plurality of display apparatuses by using one display effect coefficient. For example, if the at least two display apparatuses include a first display apparatus, a second display apparatus, and a third display apparatus, the first display apparatus is determined from the at least two display apparatuses when the display effect coefficient is less than or equal to a first preset threshold; the second display apparatus is determined from the at least two display apparatuses when the display effect coefficient is greater than a first preset threshold and less than or equal to a second preset threshold; and a third display apparatus is determined from the at least two display apparatuses when the display effect coefficient is greater than the second preset threshold.

In the foregoing technical solution, an ambient environment of the vehicle and factors affecting a display effect of a display apparatus in a driving status of the vehicle are comprehensively considered to perform display apparatus selection and/or display apparatus switching, so that a determined display apparatus is more suitable for displaying information required for driving in a current driving environment. This helps further improve driving experience and driving safety of the driver.

With reference to the first aspect, in some implementations of the first aspect, the first display apparatus is a vehicle-mounted projection apparatus, the display effect information includes obstacle distance information, the obstacle distance information indicates a distance between an obstacle in front of the vehicle and the vehicle, and the method further includes: obtaining head posture information of a driver of the vehicle; determining a projectable interval based on the head posture information and the obstacle distance information, where the projectable interval indicates a visible range of the driver; and controlling a second display apparatus to display the information required for driving when the projectable interval is less than a projection requirement interval, where the at least two display apparatuses include the second display apparatus, and the projection requirement interval indicates an area required for displaying the information required for driving.

For example, the head posture information of the driver includes location information of a driver's head, for example, a head height of the driver. When a location of a driver's seat in a front-and-rear direction in a cabin varies, a field of view of the driver may be affected. Alternatively, when a height of a driver is different, a height of a head may also affect the field of view of the driver. When an obstacle in front of the vehicle is close to the vehicle, a vehicle-mounted projection apparatus may project a part of an image onto the obstacle, resulting in distortion of information included in the image. Therefore, the projectable interval may be determined based on the head posture information and the obstacle distance information.

Specifically, when the projectable interval is less than the projection requirement interval, the driver cannot obtain a complete image projected by the vehicle-mounted projection apparatus. As a result, the obtained information required for driving is incomplete, which may cause poor driving experience and even affect driving safety. When the projection requirement interval falls within the projectable interval, it may be considered that the driver can obtain the complete image projected by the vehicle-mounted projection apparatus, and the vehicle-mounted projection apparatus may be used to display the information required for driving.

In a specific implementation process, different boundaries, such as an upper boundary and a lower boundary may be set based on a size of the projectable interval. The upper boundary of the projectable interval is a boundary far away from the vehicle, and the lower boundary of the projectable interval is a boundary that is close to the vehicle. Similarly, an upper boundary and a lower boundary may also be set for the projection requirement interval. The upper boundary of the projection requirement interval is a boundary that is far away from the vehicle, and the lower boundary of the projection requirement interval is a boundary that is close to the vehicle.

It should be understood that "the projection requirement interval falling within the projectable interval" includes the following cases: The upper boundary of the projection requirement interval overlaps the upper boundary of the projectable interval, and the lower boundary of the projection requirement interval falls within the projectable interval; the lower boundary of the projection requirement interval overlaps the lower boundary of the projectable interval, and the upper boundary of the projection requirement interval falls within the projectable interval; the upper boundary of the projection requirement interval overlaps the upper boundary of the projectable interval, and the lower boundary of the projection requirement interval overlaps the lower boundary of the projectable interval; or both the upper boundary and the lower boundary of the projection requirement interval fall within the projectable interval.

For example, the projectable interval being less than the projection requirement interval may include the following cases: Both the upper boundary and the lower boundary of the projectable interval fall within the projection requirement interval; one boundary of the projectable interval falls within the projection requirement interval, and the other boundary falls outside the projection requirement interval; or an area formed by the upper boundary and the lower boundary of the projectable interval is smaller than an area formed by the upper boundary and the lower boundary of the projection requirement interval.

In some possible implementations, the upper boundary and the lower boundary of the projection requirement interval may be adjusted by controlling a projection angle of the vehicle-mounted projection apparatus. After the projectable interval is determined, if the projection requirement interval does not fall within the projectable interval, the vehicle-mounted projection apparatus may be controlled to adjust the projection angle. After the adjustment, if the projection requirement interval still does not fall within the projectable interval, it is considered that the projectable interval is less than the projection requirement interval, and display apparatus switching is performed.

In some possible implementations, the upper boundary of the projectable interval is a boundary of a preset value. For example, the upper boundary of the projectable interval may be a boundary that can ensure a good projection effect, or may be another boundary. In this case, the lower boundary of the projectable interval may be determined based on the head posture information. In some possible implementations, the obstacle distance information may further indicate a distance between an obstacle and the upper boundary of the projectable interval. When the distance is less than or equal to a preset threshold, it is considered that the vehicle may perform projection onto the obstacle in the driving process, and the display apparatus is switched to the second display apparatus. It should be understood that the distance between the obstacle and the upper boundary of the projectable interval may be determined based on the distance between the obstacle and the vehicle and coordinates of the upper boundary of the projectable interval in a vehicle coordinate system. For example, the obstacle may include various types of transportation tools, a bridge pier, a street light, a pedestrian, and other obstacles that may affect a projection effect of the vehicle-mounted projection apparatus.

According to foregoing technical solution, an upper limit and a lower limit of projection by the vehicle-mounted projection light can be determined based on a driver posture, a location of an obstacle in front of the vehicle, and the like, so as to determine whether the vehicle-mounted projection light can be used for information display. This provides a reliable basis for display apparatus switching. In addition, when the distance between the obstacle and the upper boundary of the projectable interval is less than or equal to a preset threshold, it is considered that the vehicle may perform projection onto the obstacle in the driving process. As a result, the information required for driving is not completely displayed, and driving experience of the user may be affected. Alternatively, when important information (such as ramp turning information) cannot be obtained due to incomplete display of the information required for driving, driving safety is even severely affected. According to foregoing technical solution, the projection angle of a vehicle-light projection light may be adjusted in real time based on the projectable interval, to achieve a good projection effect, and prevent a dangerous situation in which the driver cannot learn complete navigation information because vehicle light projection is performed on an obstacle in front. This helps improve driving experience and driving safety.

With reference to the first aspect, in some implementations of the first aspect, the method further includes: determining an eye location of the driver based on the head posture information; determining a first location of a bonnet of the vehicle based on the eye location, where the first location of the bonnet is a highest location at which a line of sight of the driver is blocked by the bonnet of the vehicle; and determining a lower boundary of the projectable interval based on the eye location and the first location of the bonnet, and determining an upper boundary of the projectable interval based on the obstacle distance information.

For example, in some vehicles, a bonnet of a vehicle is a hood (hood) of an engine compartment; and in some vehicles, a bonnet of a vehicle is a front trunk lid or an engine cover.

In some possible implementations, the lower boundary of the projectable interval may be determined based on a straight propagation principle of light, the eye location of the driver, and the first location of the bonnet of the vehicle. More specifically, the lower boundary of the projectable interval may be determined based on locations of binocular pupils and the first location of the bonnet. Optionally, a location of the obstacle may be determined as the upper boundary of the projectable interval.

In the foregoing technical solution, the lower boundary of the projectable interval is determined based on the eye location or the locations of the binocular pupils of the driver, so that accuracy of the determined lower boundary can be improved, and it is further ensured that the driver can obtain complete information when the vehicle-mounted projection apparatus is used to display the information required for driving.

With reference to the first aspect, in some implementations of the first aspect, the method further includes: when the first display apparatus displays the information required for driving, obtaining displayed content of the first display apparatus; determining a display effect value based on the displayed content, where the display effect value represents visual comfort of human eyes; and controlling a third display apparatus to display the information required for driving when the display effect value is less than or equal to a second threshold, where the at least two display apparatuses include the third display apparatus.

In some possible implementations, the display effect value is a dimensionless quantity, and a specific value may be a real number between 0 and 1. For example, the second threshold may be 0.75, 0.8, or another value.

In some possible implementations, the display effect value being less than or equal to the second threshold means that the display effect of the first display apparatus is poor, and in a current scenario, the first display apparatus is not suitable for information display. For example, if the first display apparatus is a HUD, displayed content of the HUD may cause severe dizziness of the driver. Alternatively, if the first display apparatus is a vehicle-mounted projection apparatus, most content cannot be projected to a road surface ahead, so that the driver cannot learn correct navigation information.

In some possible implementations, the display effect value being less than or equal to the second threshold means that the display effect of the first display apparatus is poor, and in a current scenario, the first display apparatus is still used for information display. However, best driver experience may not be achieved. For example, if the first display apparatus is a HUD, luminance of displayed content of the HUD may be low, causing eye strain of the driver. Alternatively, if the first display apparatus is the vehicle-mounted projection apparatus, only a small part of the content cannot be projected to a road surface ahead, but driver's learning of correct navigation information is not affected.

In some possible implementations, the display effect value being less than or equal to the second threshold may be caused by the display apparatus. For example, the display apparatus is faulty. In this case, although it is determined, based on the environment information and the vehicle driving status information, that the first display apparatus is suitable for information display, the first display apparatus cannot continue display due to a fault of the first display apparatus or the like. In this case, display apparatus switching may be performed based on the display effect value.

According to the foregoing technical solution, a display effect of a display apparatus is monitored in real time, and the display apparatus is switched in a timely manner when the display effect is poor. Particularly, when the display apparatus is not suitable for information display for a reason of the display apparatus, display apparatus switching may alternatively be automatically performed. This helps improve driving experience and driving safety of the user.

With reference to the first aspect, in some implementations of the first aspect, the method further includes: determining whether first duration is greater than or equal to a third threshold, where the first duration is duration in which the display effect value is less than or equal to the second threshold; and the controlling a third display apparatus to display the information required for driving when the display effect value is less than or equal to a second threshold includes: controlling the third display apparatus to display the information required for driving when the first duration is greater than or equal to the third threshold.

For example, the third threshold may be 5 seconds, 10 seconds, or other duration. When duration in which the display effect value is less than or equal to the second threshold is greater than or equal to the third threshold, it is considered that in a current driving scenario, if the first display apparatus is not suitable for displaying the information required for driving, display apparatus switching is performed.

In some possible implementations, after the third display apparatus is controlled to display the information required for driving, the information displayed by the first display apparatus is kept for specific duration. For example, the first display apparatus is turned off after the information displayed by the first display apparatus is kept for 5 seconds or 10 seconds.

In the foregoing technical solution, display apparatus switching is performed after it is determined that the display effect value is less than or equal to the preset threshold for specific duration. This can prevent frequent apparatus switching caused by signal instability, help prevent distraction of the driver, and improve driving experience and driving safety.

With reference to the first aspect, in some implementations of the first aspect, the method further includes: notifying the driver that switching to the third display apparatus is about to perform and/or is performed to display the information required for driving.

In some possible implementations, a display apparatus like the HUD or a central display may provide a notification to the driver, or the notification may be provided to the driver through voice broadcast, or the notification may be provided to the driver through a human-machine interaction interface like an HMI.

In some possible implementations, before switching, the driver may be notified that switching to the third display apparatus is about to perform; or after the switching, the driver may be notified that switching to the third display apparatus is performed to display the information required for driving; or the switching event may be indicated before and after the switching.

According to the foregoing technical solution, it can be ensured that the driver learns of a switching event of a display apparatus in a timely manner. This helps the driver focus on a display apparatus that is displaying information in a timely manner, and prevents a case in which the driver cannot obtain the information required for driving for a long time. This helps improve driving safety.

With reference to the first aspect, in some implementations of the first aspect, the method further includes: notifying the driver that the display effect value is less than or equal to the second threshold.

In some possible implementations, if the display effect value of the first display apparatus is less than or equal to the second threshold, but no third display apparatus is available for switching, the driver may manually turn off the current first display apparatus based on the foregoing notification information, or switch to another display apparatus for information display.

In some possible implementations, the driver may implement the foregoing operations through a human-machine interaction interface like the HMI, or may implement the foregoing operations in another manner.

According to the foregoing technical solution, when a display effect is poor, the driver may be notified, so that the driver performs a corresponding operation in a timely manner based on a notification. This ensures safety in a driving process.

With reference to the first aspect, in some implementations of the first aspect, the method further includes: after the controlling the third display apparatus to display the information required for driving, controlling the first display apparatus to display the information required for driving.

In some possible implementations, after switching from the first display apparatus to the third display apparatus to display the information required for driving, the driver may manually switch back to the first display apparatus to display the information required for driving.

For example, the controlling the first display apparatus to display the information required for driving may be controlling, in response to the operation of switching back to the first display apparatus by the driver, the first display apparatus to display the information, or may be automatically switching back to the first display apparatus for information display based on the display effect value, the display effect coefficient, or the like.

In the foregoing technical solution, flexible switching may be performed between display apparatuses. The foregoing switching may be flexible switching implemented through automatic control of the vehicle, or may be flexible switching performed by the driver based on a personal preference. In this way, the technical solution is suitable for more driving scenarios.

With reference to the first aspect, in some implementations of the first aspect, the method further includes: obtaining information about an ambient environment of the vehicle; and determining the display effect information based on the information about the ambient environment, where the information about the ambient environment includes at least one of the following: a luminous intensity, a road surface condition, a road scenario, a current weather condition, an obstacle location, and a distance between an obstacle and the vehicle.

In some possible implementations, the information about the ambient environment may be detected by different sensors. Further, the display effect information may be determined based on the foregoing information about the ambient environment.

In some possible implementations, the vehicle may further perform display apparatus adjustment based on the display effect information. In an example, as described above, the projection angle of the vehicle-mounted projection apparatus is adjusted based on the projectable interval determined based on the display effect information. In another example, a display angle, luminance, or the like of the HUD may be further adjusted based on the display effect information. Alternatively, other adjustment may be made to the display apparatus based on the display effect information. This is not specifically limited in this application.

With reference to the first aspect, in some implementations of the first aspect, the first display apparatus includes at least one of the following: a head-up display HUD, a vehicle-mounted projection light, or a vehicle-mounted display.

For example, the HUD may be a C-HUD, a W-HUD, or an AR-HUD, or may be another type of HUD. The vehicle-mounted display may be a central display, a rear-view mirror display, or another vehicle-mounted display. The vehicle-mounted projection light may be a headlight, or another vehicle-mounted projection apparatus.

According to a second aspect, an apparatus for display apparatus control is provided, where the apparatus includes: an obtaining unit, configured to obtain display effect information of a vehicle, where the display effect information includes information that affects display effects of at least two display apparatuses, and the vehicle includes the at least two display apparatuses; and a processing unit, configured to: determine a first display apparatus from the at least two display apparatuses based on the display effect information; and control the first display apparatus to enter a display preparation state, or control the first display apparatus to display information required for driving.

With reference to the second aspect, the processing unit is further configured to: determine a display effect coefficient of the first display apparatus based on the display effect information, where the display effect coefficient indicates a degree of impact of the display effect information on a display effect of the first display apparatus; and determine the first display apparatus from the at least two display apparatuses when the display effect coefficient is less than or equal to a first threshold.

With reference to the second aspect, in some implementations of the second aspect, the first display apparatus is a vehicle-mounted projection apparatus, the display effect information includes obstacle distance information, the obstacle distance information indicates a distance between an obstacle in front of the vehicle and the vehicle, and the obtaining unit is further configured to: obtain head posture information of a driver of the vehicle; and the processing unit is further configured to: determine a projectable interval based on the head posture information and the obstacle distance information, where the projectable interval indicates a visible range of the driver; and control a second display apparatus to display the information required for driving when the projectable interval is less than a projection requirement interval, where the at least two display apparatuses include the second display apparatus, and the projection requirement interval indicates an area required for displaying the information required for driving.

With reference to the second aspect, in some implementations of the second aspect, the processing unit is further configured to: determine an eye location of the driver based on the head posture information; determine a first location of a bonnet of the vehicle based on the eye location, where the first location of the bonnet is a highest location at which a line of sight of the driver is blocked by the bonnet of the vehicle; and determine a lower boundary of the projectable interval based on the eye location and the first location of the bonnet, and determine an upper boundary of the projectable interval based on the obstacle distance information.

With reference to the second aspect, in some implementations of the second aspect, the obtaining unit is further configured to: when the first display apparatus displays the information required for driving, obtain displayed content of the first display apparatus; and the processing unit is further configured to: determine a display effect value based on the displayed content, where the display effect value represents visual comfort of human eyes; and control a third display apparatus to display the information required for driving when the display effect value is less than or equal to a second threshold, where the at least two display apparatuses include the third display apparatus.

With reference to the second aspect, in some implementations of the second aspect, the processing unit is further configured to: determine whether first duration is greater than or equal to a third threshold, where the first duration is duration in which the display effect value is less than or equal to the second threshold; and control the third display apparatus to display the information required for driving when the first duration is greater than or equal to the third threshold.

With reference to the second aspect, in some implementations of the second aspect, the processing unit is further configured to notify the driver that switching to the third display apparatus is about to perform and/or is performed to display the information required for driving.

With reference to the second aspect, in some implementations of the second aspect, the processing unit is further configured to notify the driver that the display effect value is less than or equal to the second threshold.

With reference to the second aspect, in some implementations of the second aspect, the processing unit is further configured to after controlling the third display apparatus to display the information required for driving, control the first display apparatus to display the information required for driving.

With reference to the second aspect, in some implementations of the second aspect, the obtaining unit is further configured to: obtain information about an ambient environment of the vehicle; and the processing unit is further configured to determine the display effect information based on the information about the ambient environment, where the information about the ambient environment includes at least one of the following: a luminous intensity, a road surface condition, a road scenario, a current weather condition, an obstacle location, and a distance between an obstacle and the vehicle.

With reference to the second aspect, in some implementations of the second aspect, the first display apparatus includes at least one of the following: a head-up display HUD, a vehicle-mounted projection light, or a vehicle-mounted display.

According to a third aspect, a computer-readable medium is provided. The computer-readable medium stores program code, and when the computer program code is run on a computer, the computer is enabled to perform the method according to any one of the possible implementations of the first aspect.

In embodiments of this application, an apparatus for displaying information required for driving is determined based on information that affects a display effect of a display apparatus, so that an apparatus suitable for displaying the information required for driving can be preliminarily determined based on environment information, and a driver does not need to perform selection. This helps improve comfort of the driver and safety in a driving process. In the driving process, an ambient environment of the vehicle and factors affecting a display effect in a driving status of the vehicle are comprehensively considered to perform display apparatus selection and/or display apparatus switching, so that a display apparatus more suitable for displaying the information required for driving in a current driving environment is used. This helps further improve driving experience and driving safety of the driver. An upper limit and a lower limit of projection by the vehicle-mounted projection light can be determined based on a driver posture, a location of an obstacle in front of the vehicle, and the like, so as to determine whether the vehicle-mounted projection light can be used for information display. This provides a reliable basis for display apparatus switching. A projection angle of a vehicle-light projection light is adjusted in real time based on the projectable interval, to achieve a good projection effect, and prevent a dangerous situation in which the driver cannot learn complete navigation information because vehicle light projection is performed on an obstacle in front. This helps improve driving experience and driving safety. In a process in which a display apparatus performs display, a display effect of the display apparatus can be monitored in real time, and the display apparatus is switched in a timely manner when the display effect is poor. This helps improve driving experience and driving safety of a user. In addition, display apparatus switching is performed after it is determined that a display effect value is less than or equal to a preset threshold for specific duration. This can prevent frequent apparatus switching caused by signal instability, help prevent distraction of the driver, and improve driving experience and driving safety. By notifying the driver of a display apparatus switching event through a display apparatus, a voice system, or the like, it can be ensured that the driver learns of display apparatus switching in a timely manner. This helps the driver focus on a display apparatus that is displaying information in a timely manner, and prevents a case in which the driver cannot obtain the information required for driving for a long time. This helps improve driving safety. When a display effect is poor, the driver may be notified through a display apparatus, a voice system, or the like, so that the driver performs a corresponding operation in a timely manner based on a notification. This ensures safety in the driving process.

### BRIEF DESCRIPTION OF DRAWINGS

FIG. 1 is a diagram of a vehicle cabin scenario according to an embodiment of this application;
FIG. 2 is a block diagram of functions of a vehicle according to an embodiment of this application;
FIG. 3 is a diagram of an architecture of a system for display apparatus control according to an embodiment of this application;
FIG. 4 is a schematic flowchart of a method for display apparatus control according to an embodiment of this application;
FIG. 5 is another schematic flowchart of a method for display apparatus control according to an embodiment of this application;
FIG. 6 is another schematic flowchart of a method for display apparatus control according to an embodiment of this application;
FIG. 7 is a diagram of a scenario of determining a projectable interval according to an embodiment of this application;
FIG. 8 is another schematic flowchart of a method for display apparatus control according to an embodiment of this application;
FIG. 9(a) to FIG. 9(e) are diagrams of notifying a driver of related information according to an embodiment of this application;
FIG. 10 is another schematic flowchart of a method for display apparatus control according to an embodiment of this application;
FIG. 11 is a block diagram of an apparatus for display apparatus control according to an embodiment of this application; and
FIG. 12 is another block diagram of an apparatus for display apparatus control according to an embodiment of this application.

### DESCRIPTION OF EMBODIMENTS

The following describes technical solutions of embodiments in this application with reference to accompanying drawings.

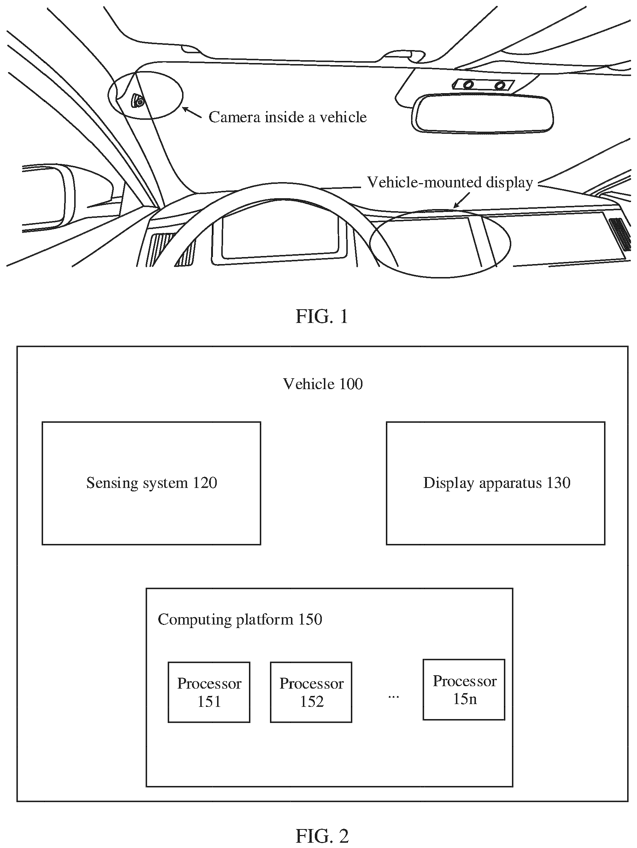

FIG. 1 is a diagram of a vehicle cabin scenario according to an embodiment of this application. One or more cameras may be installed inside a smart cabin, and are configured to capture an image inside or outside the cabin, for example, a driver monitor system (driver monitor system, DMS) camera, a cabin monitor system (cabin monitor system, CMS) camera, and a dashcam (dashcam). For example, in FIG. 1, a camera is disposed on an A pillar. A camera used to capture the inside of the cabin and a camera used to capture the outside of the cabin may be a same camera, or may be different cameras. In addition, a vehicle-mounted display is further disposed in the cabin. For example, in FIG. 1, a display is disposed in a center console area. In a driving process of the vehicle, information required for driving may be displayed by at least one of a vehicle-mounted display, a HUD (not shown in FIG. 1), and a vehicle-mounted projection light (not shown in FIG. 1). The vehicle-mounted projection light displays information by using a DLP technology. It should be understood that, in embodiments of this application, a location of a camera that collects image information of the inside of the cabin is not specifically limited. The camera may be located on the A pillar shown in FIG. 1, or may be located below a steering wheel, or may be located on a B pillar, or may be located near a rear-view mirror, or the like.

FIG. 2 is a block diagram of functions of a vehicle 100 according to an embodiment of this application. The vehicle 100 may include a sensing system 120, a display apparatus 130, and a computing platform 150. The sensing system 120 may include several types of sensors that sense information about an ambient environment of the vehicle 100. For example, the sensing system 120 may include a positioning system. The positioning system may be a global positioning system (global positioning system, GPS), or may be one or more of a BeiDou system or another positioning system, an inertia measurement unit (inertial measurement unit, IMU), a Lidar, a millimeter-wave radar, an ultrasonic radar, or a camera apparatus. In a driving process of the vehicle, the sensor and the like may be configured to obtain the information about the ambient environment of the vehicle, and the camera apparatus may collect head posture information of a driver and information about an ambient environment in the driving process.

The display apparatus 130 in the cabin is mainly classified into two types. A first type is a vehicle-mounted display. A second type is a projection display, for example, a HUD. The vehicle-mounted display is a physical display, and is an important part of an infotainment system. A plurality of displays may be disposed in the cabin, for example, a human-machine interface (human-machine interface, HMI) cluster display, a central display, a display in front of a passenger in a front passenger seat (also referred to as a front-seat passenger), a display in front of a rear-seat passenger on the left, and a display in front of a rear-seat passenger on the right. Even a window may be used as a display for display. A head-up display is also referred to as a head-up display system. It is mainly used to display driving information such as speed and navigation on a display device (for example, a windshield) in front of a driver. In this way, a time of shifting eyes by the driver is reduced, and a pupil change due to eye shifting by the driver is avoided. This improves driving safety and comfort. For example, the HUD includes a combiner head-up display (combiner-HUD, C-HUD) system, a windshield head-up display (windshield-HUD, W-HUD) system, and an augmented reality head-up display (augmented reality HUD, AR-HUD) system. The display apparatus 130 further includes a vehicle-mounted projection apparatus, for example, a projection headlight, and a projection light that is at another location of the vehicle.

Some or all functions of the vehicle 100 are controlled by the computing platform 150. The computing platform 150 may include processors 151 to 15n (n is a positive integer). The processor is a circuit having a signal processing capability. In an implementation, the processor may be a circuit having a capability of instruction reading and running, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions, and some or all of the processors 151 to 15n may invoke the instructions in the memory and execute the instructions, to implement corresponding functions.

In this embodiment of this application, the processor may obtain environment information and vehicle driving status information that are detected by the sensing system 120, and determine, based on the environment information and the vehicle driving status information, whether a display effect of the display apparatus meets a requirement of comfortable driving and/or safe driving. In some possible implementations, the environment information and the vehicle driving status information may be further stored in the memory of the computing platform 150 in a form of data. The environment information includes but is not limited to a luminous intensity collected by a photosensitive sensor and a driving scenario, a road surface condition, an obstacle distance, and the like that are collected by a camera apparatus. The vehicle driving status information includes but is not limited to a projectable range of the vehicle-mounted projection light determined based on head posture information of the driver and environment information, where the processor may further obtain the head posture information of the driver detected by the sensing system 120 in some possible implementations. Binocular pupil location information of the driver may be extracted from the head posture information of the driver. In some possible implementations, the processor may process the environment information and the vehicle driving status information to obtain a parameterized indicator indicating impact of the foregoing information on a display effect of the display apparatus. The processor may be further configured to: determine, based on a display effect of a current display apparatus, whether to switch the display apparatus, and determine to switch the display apparatus when the display effect cannot meet a requirement of comfortable driving and/or safe driving. The processor may be further configured to control two or more display apparatuses to simultaneously display the information required for driving.

It should be understood that the foregoing operations may be performed by a same processor, or may be performed by one or more processors. This is not specifically limited in this embodiment of this application.

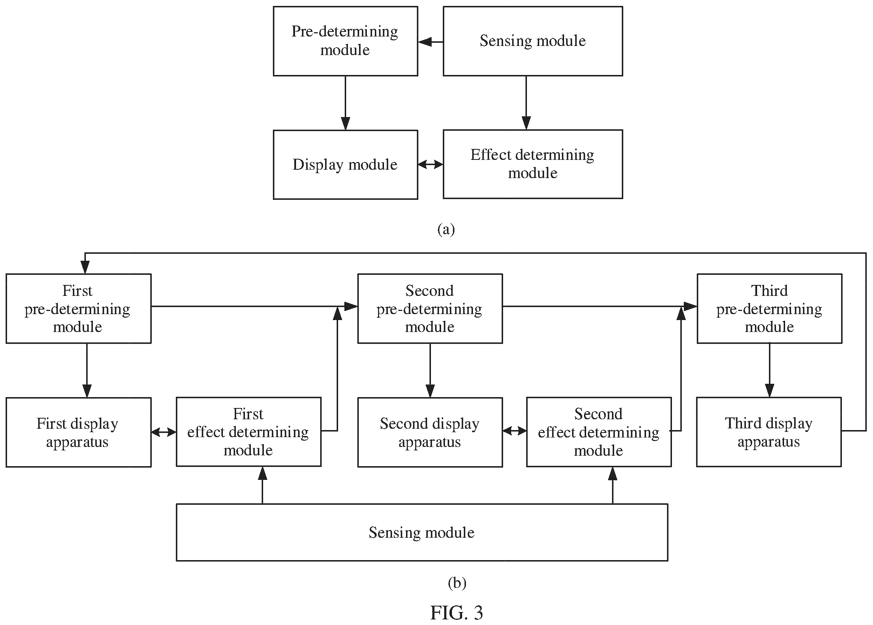

FIG. 3 is a diagram of an architecture of a system for display apparatus control according to an embodiment of this application. As shown in (a) in FIG. 3, the system includes a sensing module, a display module, a pre-determining module, and an effect determining module. The sensing module may include one or more types of camera apparatuses and one or more types of sensors in the sensing system 120 shown in FIG. 2. The display module may include one or more display apparatuses in the display apparatus 130 shown in FIG. 2. The pre-determining module and the effect determining module may include one or more processors in the computing platform 150 shown in FIG. 2.

The pre-determining module may be configured to determine whether the display apparatus in the display module is available. In an example, the pre-determining module is configured to determine whether a first display apparatus is available, including: determining whether a vehicle has the first display apparatus, and whether a current luminous intensity is suitable for working of the first display apparatus. In another example, the pre-determining module preliminarily determines, based on a current luminous intensity, a display apparatus configured to display information required for driving. When the pre-determining module preliminarily determines that the display apparatus may be configured to display the information required for driving, the display apparatus is indicated to enter a display preparation state. Specifically, the display preparation state may include waking up a sensing capability of a sensor required for the display apparatus. For example, if the display apparatus is an AR-HUD, a DMS in-cabin visual sensor, an outer-cabin front camera, an outer-cabin luminance sensor, an AR-HUD picture generation unit, and the like may be woken up. If the display apparatus is a vehicle-mounted projection light, a digital video recorder (digital video recorder, DVR) camera, a DLP picture generation unit, and the like may be woken up. Then, the display module indicates the effect determining module to start. The effect determining module is configured to determine, based on environment information obtained from the sensing module, whether the display apparatus that is in the display preparation state is suitable for a current driving environment. When it is determined that the display apparatus is suitable for the current driving environment, the display apparatus is controlled to display the information. The effect determining module may be further configured to monitor a display effect of the display apparatus, and when it is determined that the display effect is lower than a preset threshold, the pre-determining module is indicated to determine whether another display module is available, so as to determine whether the display apparatus can be switched to the another display apparatus for information display. In some possible implementations, the pre-determining module may also monitor in real time whether each display apparatus in a current environment is suitable for displaying information required for driving, to determine whether display apparatus switching needs to be performed.

More specifically, the display module may include a first display apparatus, a second display apparatus, and a third display apparatus; the pre-determining module may include a first pre-determining module and a second pre-determining module; and the effect determining module may include a first effect determining module and a second effect determining module. As shown in (b) in FIG. 3, the first display apparatus is associated with the first pre-determining module and the first effect determining module; the second display apparatus is associated with the second pre-determining module and the second effect determining module; and the third display apparatus is associated with the third pre-determining module. Specifically, a working procedure of displaying the information required for driving is as follows: When the processor receives a navigation start instruction, the first pre-determining module is enabled. When the first pre-determining module determines that the first display apparatus can be used to display the information required for driving in the current environment, the first display apparatus is indicated to enter the display preparation state. Further, the effect determining module determines, based on information such as a road surface condition, that the first display apparatus can be used to display the information required for driving in the current environment. When the effect determining module determines that the first display apparatus is suitable for displaying the information required for driving, the first display apparatus is controlled to display the information required for driving; otherwise, the second pre-determining module is indicated to determine whether the second display apparatus can be used to display the information required for driving in the current environment. If the second pre-determining module determines that the second display apparatus is not suitable for displaying the information required for driving in the current environment, the third pre-determining module is indicated to start. In some possible implementations, when the second display apparatus is used for information display, the first pre-determining module may periodically detect whether the first display apparatus is suitable for displaying the information required for driving in the current environment; and when the third display apparatus is used for information display, the first pre-determining module and the second pre-determining module may periodically detect whether the first display apparatus and/or the second display apparatus are/is suitable for displaying the information required for driving in the current environment.

It should be understood that the foregoing modules and apparatuses are merely examples. In actual application, the foregoing modules and apparatuses may be added or deleted based on an actual requirement. In an example, the system architecture shown in (b) in FIG. 3 may further include a fourth display apparatus. In another example, the pre-determining module and the effect determining module may alternatively be combined into one module. In other words, functions of the two modules are implemented by one module. In another example, both the pre-determining module and the effect determining module may be included in the display module.

It should be noted that, the foregoing "association" includes direct or indirect signaling transmission or interaction that may be performed between modules. For example, the pre-determining module sends a pre-determining result of the pre-determining module to the processor, so that the processor controls, based on the pre-determining result, the display apparatus to enter the display preparation state; or the pre-determining module includes the processor, and the pre-determining module may directly control the display apparatus to enter the display preparation state. "Indicating" another module by a specific module may be forwarding a control instruction of the processor by the specific module, to indicate the another module to execute the control instruction; or may be generating a control instruction and sending the control instruction by the specific module to the another module. This is not specifically limited in embodiments of this application.

The information required for driving in this application includes but is not limited to: navigation information, for example, a driving route planned based on a destination, a distance to a nearest intersection, a driving rule of a lane, a current vehicle speed, a road speed limit regulation, an obstacle avoidance reminder, and obstacle avoidance route planning; visual information required for operation of the driver, for example, whether there is a special site (for example, an intersection) on a road and a location of the site, a road surface condition (for example, whether there is a defect or damage), a peripheral facility condition of a road, and a width, a line type, and a structure of a road; and other information that needs to be noted in the driving process.

In some possible implementations, the first display apparatus may be a HUD, the second display apparatus may be a vehicle-mounted projection light, and the third display apparatus may be a vehicle-mounted display; or the first display apparatus may be a vehicle-mounted projection light, the second display apparatus may be a HUD, and the third display apparatus may be a vehicle-mounted display. More specifically, the HUD may be an AR-HUD.

In some possible implementations, to determine the display apparatus used to display the information required for driving, whether each display apparatus is suitable for displaying the information required for driving is sequentially determined based on a priority of the first display apparatus being higher than a priority of the second display apparatus, and the priority of the second display apparatus being higher than a priority of the third display apparatus. More specifically, the priorities may be default priorities in a system, or may be determined by the pre-determining module based on environment information.

In some possible implementations, when the display apparatus used to display the information required for driving is determined, there is no priority differentiation between the display apparatuses. In other words, the pre-determining module simultaneously determines whether each display apparatus is suitable for displaying the information required for driving.

In some possible implementations, in the driving process, at least one of the three display apparatuses may display information. For example, at a moment, only the first display apparatus may display the information required for driving. Alternatively, the first display apparatus and the second display apparatus may display the information required for driving simultaneously. Alternatively, the first display apparatus, the second display apparatus, and the third display apparatus may display the information required for driving simultaneously.

As described above, the display system of the vehicle currently displays the information required for driving in a simple manner, and cannot perform adjustment based on a road condition in the driving process. Consequently, driving experience of the driver is poor, and even driving safety is affected. For example, if the vehicle-mounted projection light is used to display the information required for driving, it is difficult to clearly display light information in a case of high illumination, and consequently, the driver cannot learn the information required for driving in a timely manner. Alternatively, when a road surface is not flat or there is a slope in front, which is not suitable for projection, the driver cannot learn the information required for driving in a timely manner by using the vehicle-mounted projection light. If the HUD is used to display the information required for driving, in a case of low illumination, light displayed by the HUD may affect a line of sight of the driver. Especially in a scenario in which illumination is low for a long time, visual fatigue of the driver may be further caused. Consequently, driving safety is affected. In view of this, embodiments of this application provide a method and an apparatus for display apparatus control, and a vehicle, so that an apparatus for displaying information required for driving can be switched based on a change of an ambient environment and a road condition in a driving process. This helps improve safety and comfort of a driver in the driving process.

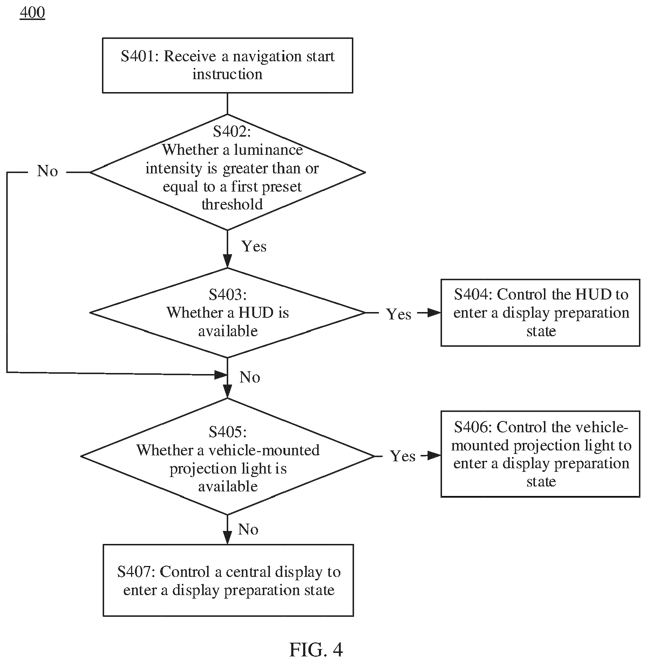

FIG. 4 is a method 400 for display apparatus control according to an embodiment of this application. The method 400 may be applied to the scenario shown in FIG. 1, or may be applied to the vehicle 100 shown in FIG. 2. The method may also be performed by the system shown in FIG. 3. Steps or operations of the method for display apparatus control in FIG. 4 are merely examples. In embodiments of this application, other operations or variations of the operations in FIG. 4 may be further performed. In addition, the steps in FIG. 4 may be performed in a sequence different from a sequence shown in FIG. 4, and some operations in FIG. 4 may not need to be performed. The method 400 includes the following steps.

S401: Receive a navigation start instruction.

Specifically, the navigation start instruction may be an input speech instruction, for example, a speech instruction "Start navigation"; or may be a navigation start instruction input by a user on a vehicle-mounted terminal of a vehicle; or may be a navigation start instruction sent by a mobile terminal associated with the vehicle; or may be a navigation start instruction in another form. This is not specifically limited in embodiments of this application.

S402: Determine whether a luminous intensity is greater than or equal to a first preset threshold.

For example, a luminous intensity of a current environment measured by a sensor is obtained. Then, the luminous intensity is compared with the first preset threshold. When it is determined that the luminous intensity is greater than or equal to the first preset threshold, S403 is performed; otherwise, S405 is performed.

S403: Determine whether a HUD is available.

Specifically, when it is determined that the HUD is available, S404 is performed; otherwise, S405 is performed.

For example, the determining whether the HUD is available includes but is not limited to: determining whether a current vehicle has a HUD, that is, whether the HUD can be detected; and whether the HUD is in an available state, that is, whether the HUD is not faulty, or whether the HUD can still be used to display information required for driving while the HUD is faulty.

S404: Control the HUD to enter a display preparation state.

S405: Determine whether a vehicle-mounted projection light is available.

Specifically, when it is determined that the vehicle-mounted projection light is available, S406 is performed; otherwise, S407 is performed.

It should be understood that the determining whether the vehicle-mounted projection light is available includes but is not limited to: determining whether a current vehicle has a vehicle-mounted projection light, that is, whether the vehicle-mounted projection light can be detected; and whether the vehicle-mounted projection light is in an available state, that is, whether the vehicle-mounted projection light is not faulty, or whether the vehicle-mounted projection light can still be used to display information required for driving while the vehicle-mounted projection light is faulty.

S406: Control the vehicle-mounted projection light to enter a display preparation state.

S407: Control a central display to enter a display preparation state.

It should be understood that, before S407 is performed, it may also be determined whether the central display is available. When it is determined that the central display is available, S407 is performed. Otherwise, the information required for driving may be displayed or broadcast in another manner, for example, through voice broadcast.

For example, the "display preparation state" may include waking up a sensing capability of a sensor required for the display apparatus; or may include controlling the display apparatus to start, where start of the display apparatus includes at least one of powering on, entering an awake state, and entering initialization. More specifically, the display preparation state of the HUD includes at least one of the following: starting a DMS in-cabin visual sensor, starting an outer-cabin front camera, starting an outer-cabin luminance sensor, and starting a HUD picture generation unit. The display preparation state of the vehicle-mounted projection light includes at least one of the following: starting a DVR camera, starting a DLP picture generation unit, and starting a related sensor.

In some possible implementations, S405 and S406 may be skipped, and S407 is directly performed. To be specific, the central display is directly controlled to enter the display preparation state while it is determined that the HUD is not available. In some possible implementations, when it is determined that the HUD is unavailable, whether the luminous intensity is less than or equal to a second threshold may be further determined. When it is determined that the luminous intensity is greater than the second preset threshold, S405 and S406 are skipped, and S407 is directly performed. When it is determined that the luminous intensity is less than or equal to the second preset threshold, S405 is performed.

Specifically, the first preset threshold and the second preset threshold may be system preset thresholds, or may be set by a user of the vehicle. The first preset threshold may be less than the second preset threshold, or the first preset threshold may be greater than or equal to the second preset threshold. This is not specifically limited in embodiments of this application.

In some possible implementations, S402 and S404 may be performed simultaneously, or S404 and S406 may be performed simultaneously. This is not specifically limited in embodiments of this application. In some possible implementations, alternatively, S401 may not be performed, but the display apparatus is controlled, based on the luminous intensity, to enter the display preparation state. In an example, if the first preset threshold is less than the second preset threshold, when the luminous intensity is between the first preset threshold and the second preset threshold, the HUD and the vehicle-mounted projection light may be controlled to enter the display preparation state simultaneously; when the luminous intensity is greater than or equal to the first preset threshold, the HUD and the central display may be controlled to enter the display preparation state simultaneously; or when the luminous intensity is less than or equal to the second preset threshold, the vehicle-mounted projection light and the central display may be controlled to enter the display preparation state simultaneously.

In some possible implementations, the display apparatus may be further preliminarily determined based on a road scenario, a current weather condition, or the like. In an example, the display apparatus may be determined based on whether a road surface is a dirt road, a sandstone road, a cement road, or an asphalt road. It is considered that when the road surface is not flat, the vehicle may seriously bump in the driving process. Consequently, a virtual image plane of the HUD shakes. In this case, a driver feels dizzy, and therefore driving safety is reduced. Therefore, when the road surface is a dirt road or a sandstone road, at least one of the vehicle-mounted projection light and the central display may be controlled to enter the display preparation state; and when the road surface is a cement road or an asphalt road, at least one of the HUD and the central display may be controlled to enter the display preparation state. In another example, information about the current weather condition may be obtained, and then the display apparatus is determined based on the information about the current weather condition. For example, when a current weather is at least one of rain, snow, and fog, at least one of the HUD and the central display may be controlled to enter the display preparation state; and when a current weather is cloudy, at least one of the vehicle-mounted projection light and the central display may be controlled to enter the display preparation state. In some possible implementations, weather levels may be further classified based on whether the current weather condition is a sunny day, a cloudy day, or a rainy day, a rainfall amount, or the like. The sunny day is a level 1, the cloudy day is a level 2, light rain is a level 3, and moderate rain to heavy rain is a level 4. The weather level constitutes a current-weather-condition parameter, and the vehicle determines the display apparatus based on the current-weather-condition parameter.

It should be understood that the central display may alternatively be another vehicle-mounted display, for example, a rear-view mirror display. This is not specifically limited in embodiments of this application.

According to the method for display apparatus control provided in this embodiment of this application, the display apparatus can be preliminarily determined based on the environment information such as the luminous intensity, the road scenario, and the current weather condition, to display the information required for driving. This helps reduce energy consumption required for display apparatus switching. Further, this helps improve driving experience and driving safety of the driver.

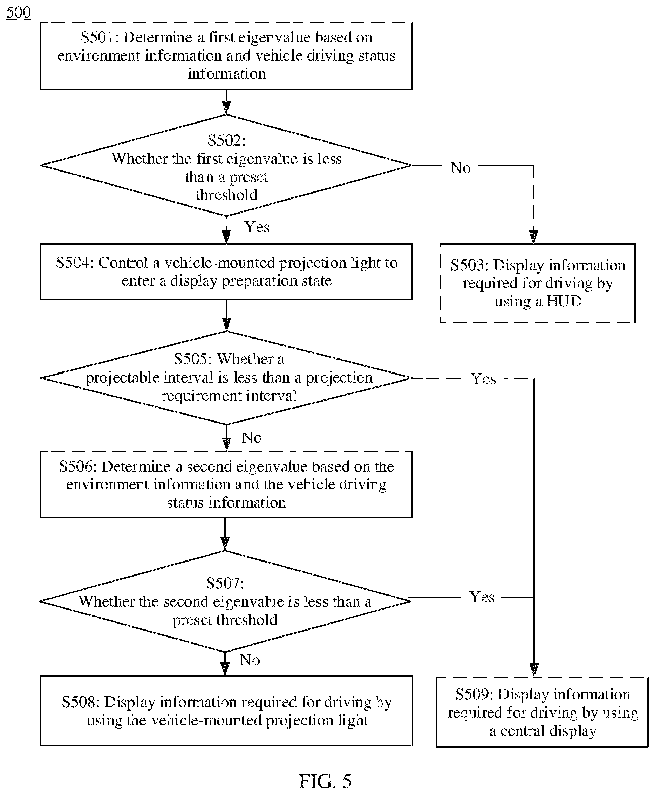

FIG. 5 shows a method 500 for display apparatus control according to an embodiment of this application. In some possible implementations, the method 500 includes subsequent steps of the method 400. Specifically, the method 500 includes the following steps.

S501: Determine a first eigenvalue based on environment information and vehicle driving status information.

The environment information includes at least one of the following: a luminous intensity, a road scenario, a current weather condition, a road surface condition, an obstacle location, and a distance between an obstacle and the vehicle. The vehicle driving status information includes at least one of the following: a real-time vehicle speed (for example, a driving speed value), a vehicle turning status (for example, a steering wheel angle of the vehicle), and a real-time vehicle tilt status (for example, an angle between the vehicle and a horizontal plane).

For example, a first luminous intensity lux_hud of a current environment measured by a sensor is obtained. The first luminous intensity lux_hud may be determined by using a luminance average detection method, or may be determined according to another algorithm. The sensor may be a visual sensor, or may be another sensor. This is not specifically limited in embodiments of this application. Further, a second luminous intensity LUX_HUD is determined according to the following formula: $LUX_HUD = lux_hud ∗ night$

Herein, "night" is a numerical variable, and a specific value of "night" may be determined based on the road scenario. More specifically, the road scenario may be determined based on map information (for example, a high definition map). In some possible implementations, "night" may be a real number greater than or equal to 0 and less than or equal to 1. In an example, when the road scenario is a tunnel scenario or a night scenario, "night" may be set to a large value. For example, "night" may be set to a value between 0.5 and 1. In another example, when the road scenario is a daytime scenario, "night" may be set to a small value. For example, "night" may be set to a value between 0 and 0.5.

Road surface information measured by a sensor is obtained, and a road surface flatness coefficient flat1 is determined based on the road surface information. The road surface flatness coefficient flat1 may be determined according to a road surface flatness level algorithm, or may be determined according to another algorithm, for example, an international roughness index algorithm. The sensor may be a visual sensor, or may be another sensor. This is not specifically limited in embodiments of this application. Further, a vehicle height change detected by an inertia sensor and/or an axle height sensor of the vehicle is obtained, and a vehicle body bumping coefficient flat2 is determined based on the vehicle height change. Further, a road surface coefficient FLAT is determined according to the following formula: $FLAT = \left(flat1+flat2\right) ∗ muddy$

Herein, "muddy" is a numerical variable, and in a specific implementation process, a value of "muddy" is variable. For example, a specific value of "muddy" may be determined based on the road scenario. In some possible implementations, "muddy" may be a real number greater than or equal to 0 and less than or equal to 1. In an example, when the road scenario is a bumping road section, for example, when a current road section is a dirt road or a gravel road, "muddy" may be set to a large value. For example, "muddy" may be set to a value between 0.5 and 1. In another example, when the road scenario is a flat road section, for example, when a current road section is a cement road or an asphalt road, "muddy" may be set to a small value. For example, "muddy" may be set to a value between 0 and 0.5.

It should be noted that the road surface flatness coefficient flat1 indicates whether a road is flat, for example, indicates whether there is a road surface wave on the road, whether a road surface is raveling, or whether there are a large quantity of continuous uphills and downhills. More specifically, a smaller value of flat1 indicates a flatter road surface. In addition, the vehicle body bumping coefficient flat2 indicates whether a road has a large quantity of pits, and the like. A smaller value of flat2 indicates a flatter road surface.

Further, a first eigenvalue P_{AR-HUD} is determined according to the following formula: ${P}_{AR - HUD} = {\sum }_{i} \left[{R}_{i \left(AR-HUD\right)}∗{W}_{i \left(AR-HUD\right)}\right]$

Herein, i is an integer greater than or equal to 0. R_{i(AR-HUD)} is an eigenvalue obtained by normalizing the foregoing parameters, for example, a value obtained by normalizing the second luminous intensity LUX_HUD, the road surface coefficient FLAT, and the like, and W_{i(AR-HUD)} is a weight of R_{i(AR-HUD)}. Specifically, W_{i(AR-HUD)} may be a real number greater than or equal to 0 and less than or equal to 1. A specific value of W_{i(AR-HUD)} may be preset by a system, or may be customized by the user of the vehicle, or the specific value of W_{i(AR-HUD)} may be determined according to a machine learning algorithm. For example, an Xgboost algorithm may be used to determine a weight of each parameter. In the Xgboost algorithm, a "tree" is continuously added to fit a residual of a previous prediction. When training is completed, k trees are obtained. To predict a score of a sample, a corresponding leaf node in each tree is found based on a feature of the sample. Each node corresponds to one score. A sum of scores corresponding to all trees is a predicted value of the sample. In a specific implementation process, for a display effect coefficient of the HUD, impact of information such as luminous intensities, road surface flatness, road scenarios, and weather conditions in different environments on the HUD may be used as training data and input into an Xgboost algorithm model, and weights of the luminous intensity, the road surface flatness, the road scenario, and the weather condition in the display effect coefficient are determined according to the Xgboost algorithm. For example, a plurality of groups of eigenvalues and corresponding labels labels are input into the Xgboost algorithm model, and a most important eigenvalue and a weight of the eigenvalue may be provided, where "label = 1" indicates that an input value needs to be converted. For example, if a plurality of groups of data are input: "label = 1, luminous intensity = 0.4, flatness = 0.7; label = 1, luminous intensity = 0.5, flatness = 0.6; label = 1, luminous intensity = 0.3, flatness = 0.9", the Xgboost algorithm model may provide a most important eigenvalue as flatness, and a weight of the eigenvalue is 0.8. In some possible implementations, it may be further provided that a weight of the eigenvalue, namely, the luminous intensity, is 0.3.

For example, R_{0(AR-HUD)} may be a value for normalized LUX_HUD, R_{1(AR-HUD)} may be a value for normalized FLAT, R_{2(AR-HUD)} may be a value for a normalized current weather condition, and R_{3(AR-HUD)} may be a value for a normalized vehicle speed. It should be understood that R_{i(AR-HUD)} may further include another parameter that may affect a display effect of the HUD. For example, R_{i(AR-HUD)} may also include a current time. This is not specifically limited in embodiments of this application. It should be further noted that, P_{AR-HUD} is a dimensionless quantity, and a specific value of P_{AR-HUD} may be a real number between 0 and 1.

S502: Determine whether the first eigenvalue is less than a preset threshold.

When it is determined that the first eigenvalue is less than the preset threshold, S503 is performed; otherwise, S504 is performed.

In a specific implementation process, a condition for performing S503 is not limited to the condition that the first eigenvalue is less than the preset threshold. In other words, S503 may be performed when the first eigenvalue is less than or equal to the preset threshold.

For example, the preset threshold may be a third preset threshold, and the third preset threshold may be a system default threshold, or may be set by the user of the vehicle. This is not specifically limited in embodiments of this application. For example, the user may adjust a value of the third preset threshold based on actual use experience. For example, the third preset threshold may be 0.5, 0.55, or 0.6, or may be another value. This is not specifically limited in embodiments of this application.

S503: Display the information required for driving by using the HUD.

In some possible implementations, when the HUD is used to display the information required for driving, environment information and a display effect are monitored in real time, to determine whether display apparatus switching needs to be performed.

S504: Control the vehicle-mounted projection light to enter a display preparation state.

S505: Determine whether a projectable interval is less than a projection requirement interval.

When the projectable interval is less than the projection requirement interval, S509 is performed; otherwise, S506 is performed.

Specifically, the projectable interval is a range of an area in which projection is visible to the driver. The projectable interval includes an upper boundary and a lower boundary. The upper boundary of the projectable interval is a boundary that is far away from the vehicle, and the lower boundary of the projectable interval is a boundary that is close to the vehicle. For example, the projectable interval may be determined based on information such as driver head posture information (for example, locations of binocular pupils of the driver), information about an obstacle in front of the vehicle, and a road slope. The projection requirement interval is a projection area required for completely displaying navigation information. More specifically, the projection requirement interval may be an area required for projection of an entire image after dual-light projection fusion is performed on the vehicle-mounted projection light. In some possible implementations, the projection requirement interval is a variable interval. For example, the projection requirement interval changes with an angle of the vehicle-mounted projection light, or the projection requirement interval changes with an area required for displayed content. Correspondingly, the projection requirement interval also includes an upper boundary and a lower boundary. The upper boundary of the projection requirement interval is a boundary that is far away from the vehicle, and the lower boundary of the projection requirement interval is a boundary that is close to the vehicle.

For ease of understanding, the "upper boundaries" and the "lower boundaries" in embodiments of this application are boundaries of the projectable interval and the projection requirement interval in a vehicle-side plane coordinate system. In actual application, the upper boundary and the lower boundary of the projectable interval and the upper boundary and the lower boundary of the projection requirement interval may be boundaries in a vehicle coordinate system or boundaries in a world coordinate system. It should be understood that the "upper boundary" and the "lower boundary" in embodiments of this application may be mapped to the vehicle coordinate system and/or the world coordinate system.

When the projectable interval is less than the projection requirement interval, the navigation information may not be displayed completely through projection by using the vehicle-mounted projection light. Consequently, the driver cannot obtain correct navigation information, driving experience is affected, and even driving safety is affected.

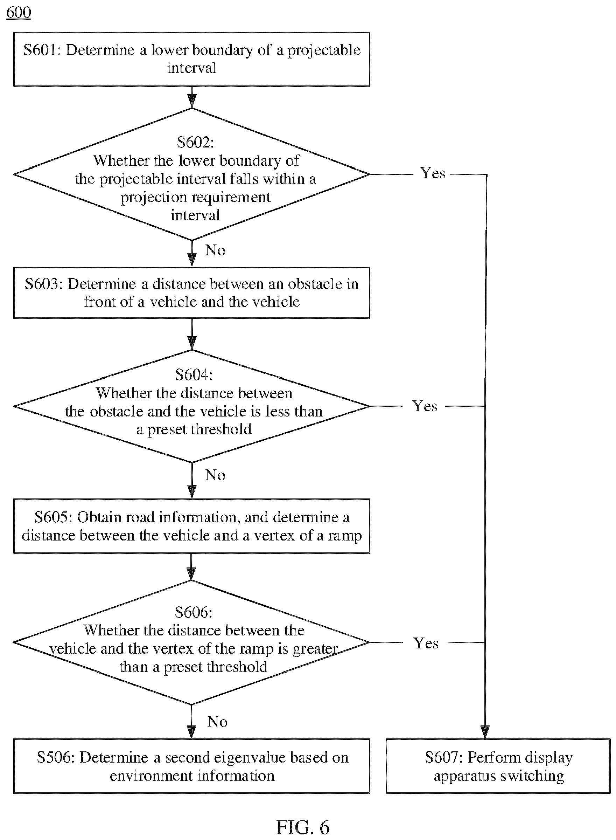

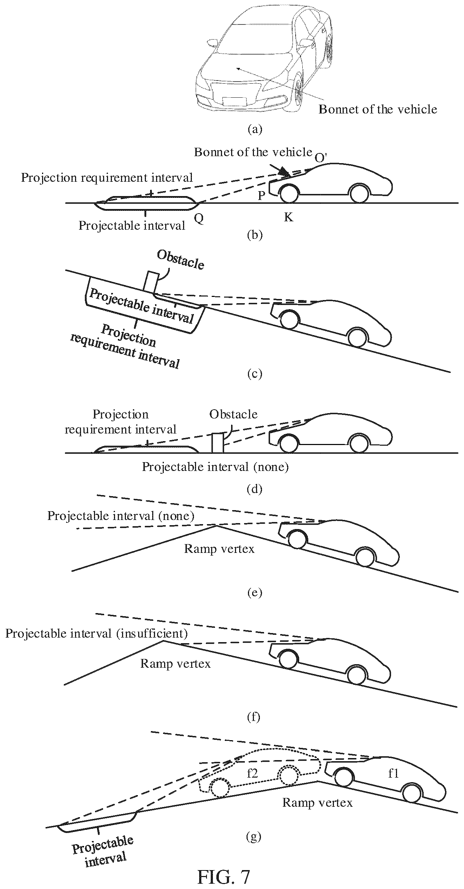

More specifically, cases in which the projectable interval is less than the projection requirement interval include but are not limited to the following cases: The projectable interval and the projection requirement interval do not overlap; the projectable interval falls within the projection requirement interval, and a size of the projectable interval is less than a size of the projection requirement interval; or the projectable interval intersects with the projection requirement interval, that is, one boundary of the projectable interval falls within the projection requirement interval, and the other boundary is outside the projection requirement interval. More detailed content is described with reference to FIG. 6 and FIG. 7. Refer to the following descriptions.

S506: Determine a second eigenvalue based on the environment information and the vehicle driving status information.

For a part that is not described in detail in the method for determining the second eigenvalue, refer to the descriptions in S501.

Specifically, a fourth luminous intensity LUX_LIGHT is determined based on a third luminous intensity lux_light: $LUX_LIGHT = lux_light ∗ night 2$

Herein, "night2" is a numerical variable, and a specific value of "night2" may be determined based on the road scenario. More specifically, the road scenario may be determined based on map information (for example, a high definition map). In some possible implementations, "night2" may be a real number greater than or equal to 0 and less than or equal to 1. In an example, when the road scenario is a tunnel scenario or a night scenario, "night2" may be set to a small value. For example, "night2" may be set to a value between 0.5 and 1. In another example, when the road scenario is a daytime scenario, "night2" may be set to a large value. For example, "night2" may be set to a value between 0 and 0.5.

A road surface coefficient FLAT2 is determined based on the road surface flatness coefficient flat1 and the vehicle body bumping coefficient flat2. $FLAT 2 = flat 1 + flat 2$

Further, a second eigenvalue P_{LIGHT} is determined according to the following formula: ${P}_{LIGHT} = {\sum }_{i} \left[{R}_{i \left(LIGHT\right)}∗{W}_{i \left(LIGHT\right)}\right]$

Herein, i is an integer greater than or equal to 0. R_{i(LIGHT)} is an eigenvalue obtained by normalizing the foregoing parameters, for example, a value obtained by normalizing the fourth luminous intensity LUX_LIGHT, the road surface coefficient FLAT2, and the vehicle speed speed, and W_{i(LIGHT)} is a weight of R_{i(LIGHT)}. Specifically, W_{i(LIGHT)} may be a real number greater than or equal to 0 and less than or equal to 1. A specific value of W_{i(LIGHT)} may be preset by a system, or may be customized by the user of the vehicle, or the specific value of W_{i(LIGHT)} may be determined according to a machine learning algorithm like the Xgboost algorithm. It should be understood that, for an implementation of determining the specific value of W_{i(LIGHT)} according to the Xgboost algorithm, refer to the descriptions in S502. Details are not described herein again.

It should be understood that R_{i(LIGHT)} may further include another parameter that may affect a display effect of the vehicle-mounted projection light. This is not specifically limited in embodiments of this application.

It should be noted that a sensor required for determining the third luminous intensity lux_light and a sensor required for determining the first luminous intensity lux_hud may be a same sensor, or may be different sensors. It should be understood that when the sensors required by the two are a same sensor, values of lux_light and lux_hud are the same at a same moment.

It should be further noted that, P_{LIGHT} is a dimensionless quantity, and a specific value of P_{LIGHT} may be a real number between 0 and 1.

S507: Determine whether the second eigenvalue is less than a preset threshold.

When it is determined that the second eigenvalue is less than the preset threshold, S509 is performed; otherwise, S508 is performed.

In a specific implementation process, a condition for performing S509 is not limited to the condition that the second eigenvalue is less than the preset threshold. In other words, S509 may be performed when the second eigenvalue is less than or equal to the preset threshold.

For example, the preset threshold may be a fourth threshold, and the fourth threshold may be a system default threshold, or may be set by the user of the vehicle. This is not specifically limited in embodiments of this application. For example, the user may adjust a value of the fourth threshold based on actual use experience. For example, the fourth threshold may be 0.5, 0.55, or 0.6, or may be another value. This is not specifically limited in embodiments of this application.

S508: Display the information required for driving by using the vehicle-mounted projection light.

In some possible implementations, when the vehicle-mounted projection light is used to display the information required for driving, environment information and a display effect are monitored in real time, to determine whether display apparatus switching needs to be performed.

S509: Display the information required for driving by using a vehicle-mounted display.

In some possible implementations, when the vehicle-mounted display is used to display the information required for driving, environment information is monitored in real time, to determine whether display apparatus switching needs to be performed.

Steps or operations of the method for display apparatus control in FIG. 5 are merely examples. In embodiments of this application, other operations or variations of the operations in FIG. 5 may be further performed. In addition, the steps in FIG. 5 may be performed based on a sequence different from a sequence shown in FIG. 5, and some operations in FIG. 5 may not need to be performed. For example, S501 to S504 may be skipped, and S505 is directly performed. For example, if it is determined, according to the method 400, that the vehicle-mounted projection light is controlled to enter the display preparation state, it may be considered that the HUD is temporarily not suitable for displaying the information required for driving, and S505 may be directly performed. In some possible implementations, when a specific display apparatus is used to display the information required for driving, it may be determined whether another display apparatus is suitable for displaying the information required for driving. For example, when S503 is performed, S504 is performed; or when S508 is performed, S501 is performed.

In some possible implementations, at least two of S503, S508, and S509 may be simultaneously performed. In addition, in this case, a display effect may be monitored, and/or whether display apparatus switching needs to be performed is determined based on the environment information.

In some possible implementations, a same formula may be used to determine the first eigenvalue and the second eigenvalue, for example, the following formula is used: $P = {\sum }_{i} \left[{R}_{i}∗{W}_{i}\right]$

Herein, i is an integer greater than or equal to 0. Rᵢ is an eigenvalue obtained by normalizing the foregoing parameters, for example, a value obtained by normalizing the fourth luminous intensity LUX_LIGHT, the road surface coefficient FLAT2, and the vehicle speed speed, and Wᵢ is a weight of Rᵢ. Further, when P is less than or equal to the third preset threshold, the HUD is used to display the information required for driving; or when P is greater than the third preset threshold and less than or equal to the fourth preset threshold, the vehicle-mounted projection light is used to display the information required for driving.

It should be understood that, in the method procedures shown in FIG. 4 and FIG. 5, the driver may also manually control the display apparatus configured to display the information required for driving. For example, one or more display apparatuses may be manually enabled, or one or more display apparatuses may be manually disabled, or another display apparatus may be enabled while an original display apparatus is retained. This is not specifically limited in embodiments of this application.

According to the method for display apparatus control provided in this embodiment of this application, a display apparatus can be switched in real time based on environment information and vehicle driving status information, to reduce discomfort caused by improper display apparatus to the driver, and help improve driving experience and driving safety. In addition, a display apparatus may be selected or switched to based on a real-time state of the driver, to further improve driving experience of the driver.

FIG. 6 shows a method 600 for display apparatus control according to an embodiment of this application. The method 600 may be used to determine whether the vehicle-mounted projection light is suitable for displaying the information required for driving. More specifically, a method for determining whether the projectable interval is less than the projection requirement interval is provided. The method 600 includes the following steps.

S601: Determine the lower boundary of the projectable interval.

A height of the driver and a location of a driver's seat in a front-and-rear direction in the cabin may affect the upper boundary and the lower boundary of the projectable interval. It should be understood that the foregoing parameters have greater impact on the lower boundary of the projectable interval. Therefore, the lower boundary of the projectable interval may be determined based on locations of eyes of the driver.

For example, with reference to FIG. 7, the following describes a method for determining the lower boundary of the projectable interval.

1. Determine locations of binocular pupils of the driver based on the head posture information of the driver according to a head recognition algorithm and/or a pupil recognition algorithm.

2. Establish a vehicle-side plane coordinate system based on a delivery model coefficient of a vehicle. Further, a central point O between two eyes in an image coordinate system is calculated based on the locations of the binocular pupils, and then two-dimensional coordinates O'(xₒ, yₒ) of O in the current vehicle-side plane coordinate system are calculated, as shown in (b) in FIG. 7. Coordinates P(xₚ, yₚ) of a point P that is a highest location at which a line of sight is blocked by a bonnet of the vehicle and coordinates L(xₗ, yₗ) and R(xᵣ, yᵣ) of lowest locations of a left tire and a right tire are calculated. Specifically, a location of the bonnet of the vehicle is shown in (a) and (b) in FIG. 7. For example, in some vehicles, a bonnet is a hood (hood) of an engine compartment; and in some vehicles, a bonnet is a front trunk lid or an engine cover.

3. Based on the law of light propagation, an intersection point of a straight line of the driver's line of sight and a straight line along which the vehicle drives represents a shortest distance Q(X_{cross}, Y_{cross}) of a visible range. Calculation formulas are as follows: ${k}_{a} = \left({x}_{p}-{x}_{o}\right) / \left({y}_{p}-{y}_{o}\right) ; {k}_{b} = \left({x}_{r}-{x}_{l}\right) / \left({y}_{r}-{y}_{l}\right) ;$ ${Y}_{cross} = \left({k}_{a}*{y}_{o} {y}_{p}-{k}_{b}*{y}_{r}+{y}_{l}\right) / \left({k}_{a}-{k}_{b}\right) ;$ and ${X}_{cross} = \left({k}_{a}*{k}_{b}*\left({x}_{o}-{x}_{p}\right)+{k}_{a}*{x}_{r}-{k}_{b}*{x}_{l}\right) / \left({k}_{a}-{k}_{b}\right) .$

Further, the vehicle side plane coordinate system coordinates Q(X_{cross}, Y_{cross}) are converted into a vehicle body coordinate system to obtain Q'(X_{cross'}, Y_{cross'}), where Q' is a point of the lower boundary of the projectable interval in the vehicle body coordinate system.

S602: Determine whether the lower boundary of the projectable interval falls within the projection requirement interval.

When it is determined that the lower boundary of the projectable interval does not fall within the projection requirement interval, S603 is performed. Otherwise, S607 is performed.

Specifically, whether the lower boundary of the projectable interval falls within the projection requirement interval may be determined based on coordinates of the projection requirement interval in the vehicle coordinate system. For example, if the projection requirement interval is Qₚᵣₒ₁(X₁, Y₁) to Qₚᵣₒ₂(X₂, Y₁) in the vehicle coordinate system, X_{cross'} ∈ (X₁, X₂), and it can be determined that the lower boundary of the projectable interval falls within the projection requirement interval. In some possible implementations, X₁ and X₂ are determined based on a projection center point and a size of a projection image. A case in which the foregoing relationship is mapped to the vehicle side plane coordinate system is shown in (c) in FIG. 7.

S603: Determine a distance between an obstacle in front of the vehicle and the vehicle.

Specifically, the distance between the obstacle ahead and the vehicle may be measured based on an apparatus like a visual sensor or a radar, or the distance between the obstacle ahead and the vehicle may be determined in another manner. This is not specifically limited in this embodiment of this application.

Further, an upper boundary of the projectable interval is determined based on a location of the obstacle ahead, as shown in (c) in FIG. 7. In some possible implementations, the obstacle may be excessively close to the vehicle, and a distance between the obstacle and the vehicle is even less than a distance between the vehicle and a nearest location at which a line of sight of the driver can reach (that is, the lower boundary of the projectable interval), as shown in (d) in FIG. 7. In this case, it may be considered that there is no projectable interval.

It should be understood that the obstacle may be another vehicle, a wall, a bridge pier, or the like, or may be another object that affects a projection effect. This is not specifically limited in this embodiment of this application.

S604: Determine whether the distance between the obstacle and the vehicle is less than a preset threshold.

When it is determined that the distance between the obstacle and the vehicle is not less than the preset threshold, S605 is performed. Otherwise, S607 is performed.

Specifically, the preset threshold may be a fifth threshold. In some possible implementations, the fifth threshold is a distance between the upper boundary of the projection requirement interval and the vehicle.

S605: Obtain road information, and determine a distance between the vehicle and a vertex of a ramp.

For example, the road information may be obtained by using a Lidar, a GPS sensor, or a camera apparatus, to determine the vertex of the ramp. For example, the vertex of the ramp (hereinafter referred to as a ramp vertex) of a road may be determined based on a lane line photographed by the camera apparatus. Further, the distance between the vehicle and the ramp vertex is determined based on location information of ramp positioning.

S606: Determine whether the distance between the vehicle and the vertex of the ramp is greater than a preset threshold.

When it is determined that the distance between the vehicle and the vertex of the ramp is not greater than the preset threshold, S506 is performed. Otherwise, S607 is performed.

It should be understood that, if the distance between the ramp vertex and the vehicle is excessively long, cases shown in (e) and (f) in FIG. 7 occur. To be specific, in the driving process of the vehicle, light of the vehicle-mounted projection light cannot be projected to a road surface of a downhill road section. As a result, the driver cannot learn the information required for driving in a timely manner. In this case, the display apparatus may need to be switched to another apparatus. When the distance between the ramp vertex and the vehicle is less than the threshold, after the vehicle travels for several seconds, the light of the vehicle-mounted projection light may be projected to the road surface of the downhill road section. As shown in (g) in FIG. 7, the vehicle is at f1 and may travel to f2 after several seconds. Then, the information can be projected to the road surface of the downhill road section. In this case, display apparatus switching may not be performed.

S607: Perform display apparatus switching.

Specifically, the display apparatus may be switched to a HUD, or may be switched to a central display, or may be switched to another display apparatus. This is not specifically limited in this embodiment of this application.

In some possible implementations, whether display apparatus switching needs to be performed may be determined based on a radian and/or an arc length of the ramp vertex. In an example, when the radian and/or of the ramp vertex is excessively large, the light of the vehicle-mounted projection light cannot be projected to a road surface in front, and consequently the driver cannot learn the information required for driving in a timely manner. In this case, the display apparatus may need to be switched to another apparatus.

In some possible implementations, the projectable interval is greater than the projection requirement interval, but the projectable interval intersects with the projection requirement interval, that is, one boundary of the projectable interval falls within the projection requirement interval, and the other boundary falls outside the projection requirement interval. In this case, a projection angle of the vehicle-mounted projection light may be adjusted based on the upper boundary and the lower boundary of the projectable interval, so that the projection requirement interval falls within the projectable interval. It should be understood that "the projection requirement interval falling within the projectable interval" includes the following cases: The upper boundary of the projection requirement interval overlaps the upper boundary of the projectable interval, and the lower boundary of the projection requirement interval falls within the projectable interval; the lower boundary of the projection requirement interval overlaps the lower boundary of the projectable interval, and the upper boundary of the projection requirement interval falls within the projectable interval; the upper boundary of the projection requirement interval overlaps the upper boundary of the projectable interval, and the lower boundary of the projection requirement interval overlaps the lower boundary of the projectable interval; or both the upper boundary and the lower boundary of the projection requirement interval fall within the projectable interval.

In some possible implementations, the projectable interval is greater than the projection requirement interval, but the projectable interval intersects with the projection requirement interval. After a projection angle of the vehicle-mounted projection light is adjusted, the projection requirement interval still does not fall within the projectable interval. In this case, display apparatus switching is performed.

Steps or operations of the method for display apparatus control in FIG. 6 are merely examples. In embodiments of this application, other operations or variations of the operations in FIG. 5 may be further performed. In addition, the steps in FIG. 6 may be performed based on a sequence different from a sequence shown in FIG. 6, and some operations in FIG. 6 may not need to be performed. For example, S601 to S603 may be skipped, and S603 is first performed. When it is determined that the obstacle in front is excessively close to the vehicle, S607 is performed, and determining the line of sight of the driver does not need to be performed. In some possible implementations, S601 and S603 may be performed simultaneously. This is not specifically limited in this embodiment of this application.

According to the method for display apparatus control provided in this embodiment of this application, an upper limit and a lower limit of proj ection by the vehicle-mounted projection light can be determined based on a driver posture, a location of an obstacle in front of the vehicle, road information, and the like, so as to determine whether the vehicle-mounted projection light can be used for information display. This provides a reliable basis for display apparatus switching. In addition, the projection angle of a vehicle-light projection light can be adjusted in real time based on the projectable interval, to achieve a good projection effect, and prevent a dangerous situation in which the driver cannot learn complete navigation information because vehicle light projection is performed on an obstacle in front. This helps improve driving experience and driving safety.

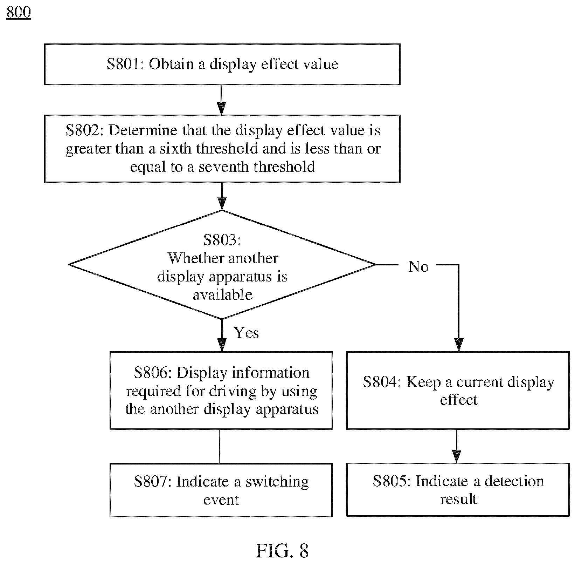

FIG. 8 shows a method 800 for display apparatus control according to an embodiment of this application. Specifically, the method 800 includes the following steps.

S801: Obtain a display effect value.

For example, a visual sensor detects content projected by a vehicle-mounted projection light or displayed content of a HUD. Further, the content projected by the vehicle-mounted projection light or the displayed content of the HUD is input into a visibility classifier, to determine a display effect value Conf, where the display effect value Conf is a visual comfort indicator for human eyes and indicates whether a projection effect or a display effect is appropriate for human eyes. In some possible implementations, the display effect value Conf is a dimensionless quantity, and a specific value of the display effect value Conf may be a real number between 0 and 1.

In some possible implementations, a visual sensor for detecting the content projected by the vehicle-mounted projection light and a visual sensor for detecting the displayed content of the HUD are sensors at different locations in a cabin, or may be a same sensor. This is not specifically limited in this embodiment of this application. For example, the visual sensor may be a wearable device, or a sensor disposed on a wearable device. For example, the sensor may be a sensor disposed at a specific location on glasses, so that the sensor can obtain the displayed content of the HUD.

In some possible implementations, a current projection effect may also be determined based on a physiological indicator of a human body. For example, in a display process of the HUD, cases such as a vague image or frame overlapping may occur, causing a physiological change of a driver like dizziness, heart rate increase, or pupil change. In this case, a physiological indicator of the driver may be monitored in a driving process. When it is detected that a heart rate of the driver increases to a threshold, or it is detected that pupils of the driver do not focus, it is determined that a current display effect is poor, and a display apparatus is controlled for switching.

S802: Determine that the display effect value is greater than a sixth threshold and is less than or equal to a seventh threshold.

Specifically, a relationship between the display effect value and the preset threshold is determined.

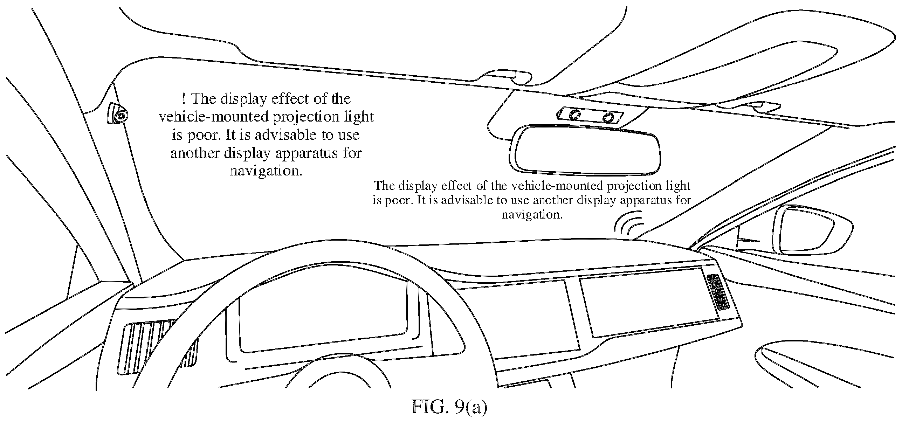

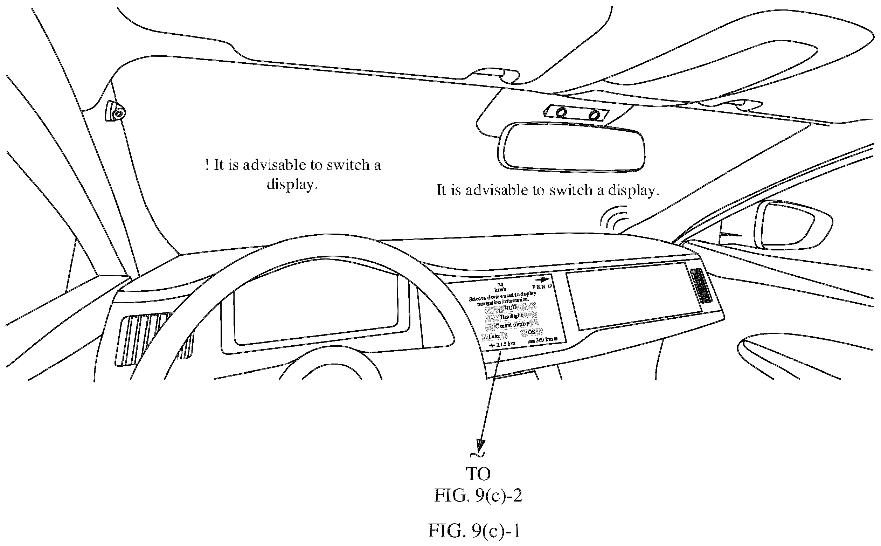

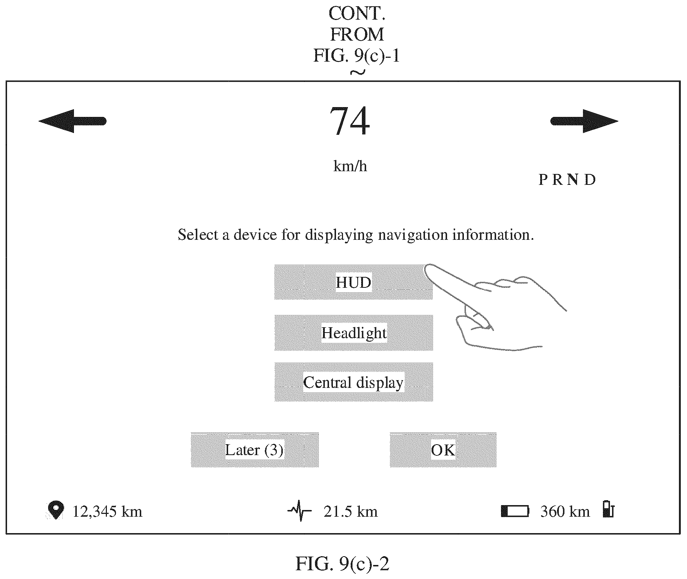

When it is determined that the display effect value is greater than the sixth threshold but is less than or equal to the seventh threshold, it is considered that a current display effect is poor. Further, a display apparatus like the HUD or a central display may provide a notification to a driver, or a notification may be provided to the driver through voice broadcast or the like. Details are shown in FIG. 9(a). For example, the sixth threshold may be 0.7 or 0.75, the seventh threshold may be 0.8 or 0.85, or the sixth threshold and the seventh threshold may be other values. This is not specifically limited in this embodiment of this application.

S803: Determine whether another display apparatus is available.

Specifically, when it is determined that a current projection effect is not good, it is determined whether another display apparatus is available. For example, if the current display apparatus is the HUD, it is determined whether the vehicle-mounted projection light, a vehicle-mounted display, and the like are available; or if the current display apparatus is the vehicle-mounted projection light, it is determined whether the HUD, the vehicle-mounted display, and the like are available.

When it is determined that the another display apparatus is unavailable, S804 is performed. Otherwise, S806 is performed.

S804: Keep a current display effect.

S805: Indicate a detection result.

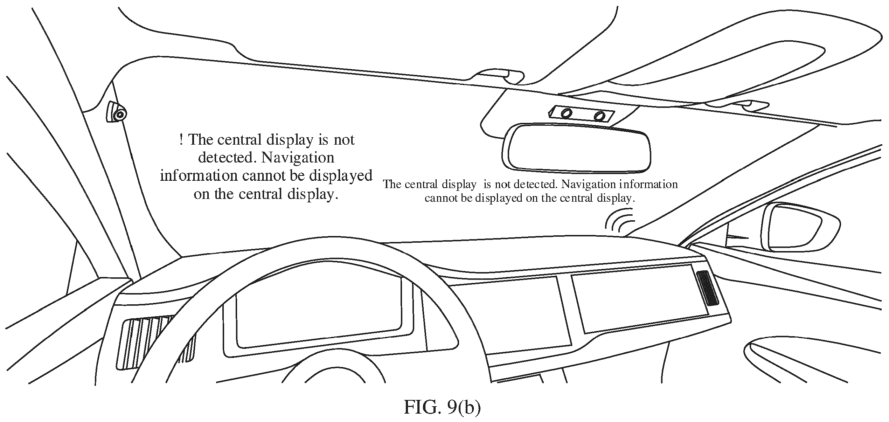

For example, a display apparatus like the HUD or the central display may provide a notification of the detection result to the driver, or the notification of the detection result may be provided to the driver through voice broadcast or the like. Details are shown in FIG. 9(b).

S806: Display information required for driving by using the another display apparatus.

In some possible implementations, a display apparatus like the HUD or the central display may provide a notification to the driver, or the notification may be provided to the driver through voice broadcast or the like. Details are shown in FIG. 9(c)-1 and FIG. 9(c)-2. Alternatively, when the notification is provided to the driver, a corresponding selection is provided for the driver through a human-machine interaction interface like an HMI. For example, the information required for driving is navigation information, and "Select a device for displaying navigation information" may be displayed through the HMI, and corresponding options "HUD", "Headlight", and "Central display" are provided. Further, the driver may tap at least one of the buttons, for example, "HUD", or "HUD" and "Central display". After the driver selects a corresponding device and taps an "OK" button, the vehicle displays the navigation information through the device selected by the driver. Alternatively, the driver may tap a "Later (3)" button to end a process of display apparatus switching, where "(3)" is a countdown of seconds. Alternatively, the driver may not perform any operation for selection, and after the countdown of seconds following the "Later" button becomes zero, that is, the button becomes "Later (0)", the notification interface is automatically closed, and the current display apparatus is used to continue displaying the navigation information.

In some possible implementations, before the another display apparatus is used to display the information required for driving, whether the another display apparatus is suitable may be determined according to the method 500 and/or the method 600.

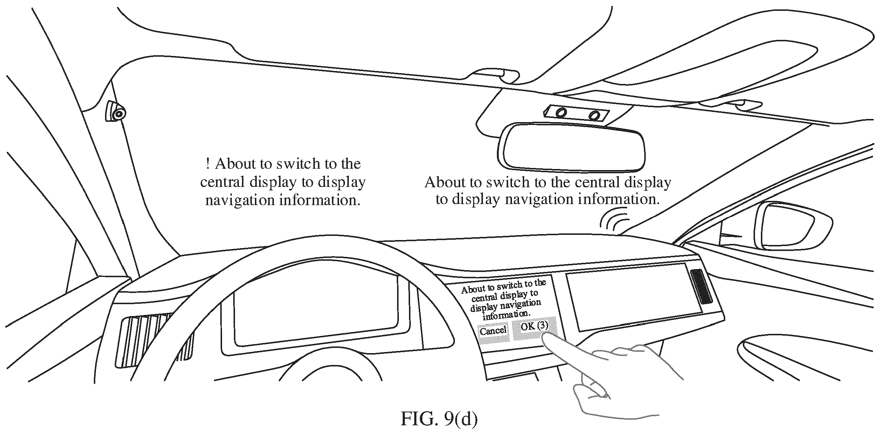

Further, when it is determined that one or more display apparatuses are available, the display apparatus is switched to the one or more display apparatuses to display the information required for driving. As shown in FIG. 9(d), the vehicle may notify, through the display apparatus like the HUD or the central display, or through voice broadcast or the like, the driver that display apparatus switching is to be performed. In some possible implementations, the HMI may be used to notify the driver that display apparatus switching is to be performed. Further, the driver may choose, through the HMI, whether to perform switching. For example, the HMI is used to notify the driver "About to switch to the central display to display navigation information". The driver may tap an "OK (3)" button on the HMI interface to confirm immediate switching to the central display, where "(3)" is a countdown of seconds. Alternatively, the driver may tap a "Cancel" button, and the vehicle does not perform display apparatus switching. Alternatively, the driver may not perform any operation for selection, and after the countdown of seconds following the "OK" button becomes zero, that is, after the "OK" button becomes "OK (0)", switching to the central display is automatically performed to display the navigation information. It should be understood that the foregoing information may also be notified to the driver through another human-machine interaction interface, so that the driver makes a selection based on the foregoing information. A type of the human-machine interaction interface is not specifically limited in this embodiment of this application.

In some possible implementations, when it is determined to perform switching, when duration of a "switching determining" condition is greater than or equal to a preset threshold, display apparatus switching is performed. In addition, displayed content of a previous display apparatus is kept for specific duration. For example, if the current display apparatus is the vehicle-mounted projection light, when it is determined that the display effect of the vehicle-mounted projection light is poor, and it is determined that the display apparatus is switched to the HUD to display the information required for driving. When it is determined that "Switch the display apparatus to the HUD" lasts for 5 seconds, the display apparatus is switched to the HUD to display the information, and the displayed content of the vehicle-mounted projection light is kept for 10 seconds.

It should be understood that the "switching determining" condition specifically means that a display effect of a specific display apparatus is better in a current environment and a vehicle driving status. For example, the "determining condition" may include the following conditions. A distance between the vehicle and a vertex of a ramp is greater than a preset threshold. A distance between an obstacle and the vehicle is less than a preset threshold. A first eigenvalue or a second eigenvalue is not less than a preset threshold. For a detailed process of determining the "switching determining" condition, refer to the descriptions in the foregoing embodiment. Details are not described herein again.

S807: Indicate a switching event.

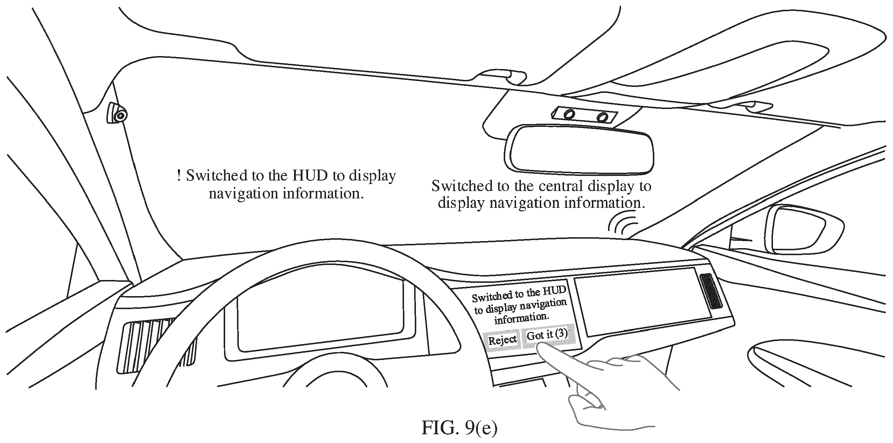

For example, the display apparatus like the HUD or the central display may provide a notification to the driver, or a notification may be provided to the driver through voice broadcast or the like. Details are shown in FIG. 9(e).

In some possible implementations, the driver may be further notified of the switching event through a human-machine interaction interface like the HMI. For example, as shown in FIG. 9(e), the HMI may indicate "Switched to the HUD to display the navigation information", and the driver may confirm, by tapping a "Got it (3)" button on the HMI interface, approval to display the navigation information through the HUD, where "(3)" is a countdown of seconds. Alternatively, the driver may tap a "Reject" button, and the vehicle continues to display the navigation information through the previous display apparatus. Alternatively, the driver may not perform any operation for selection. After the countdown of seconds following the confirmation button becomes zero, that is, after the "Got it" button becomes "Got it (0)", the notification interface is automatically closed.

According to the method for display apparatus control provided in this embodiment of this application, a display effect, that is, whether displayed content is comfortable for a driver, is monitored in real time, to determine whether display apparatus switching needs to be performed. This helps improve driving experience of the driver, and improves driving safety. In addition, in a process of display apparatus switching, related information of the driver may be indicated through a human-machine interaction interface like an HMI, so that the driver can select a display apparatus according to a personal habit, thereby further improving driving experience.

In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

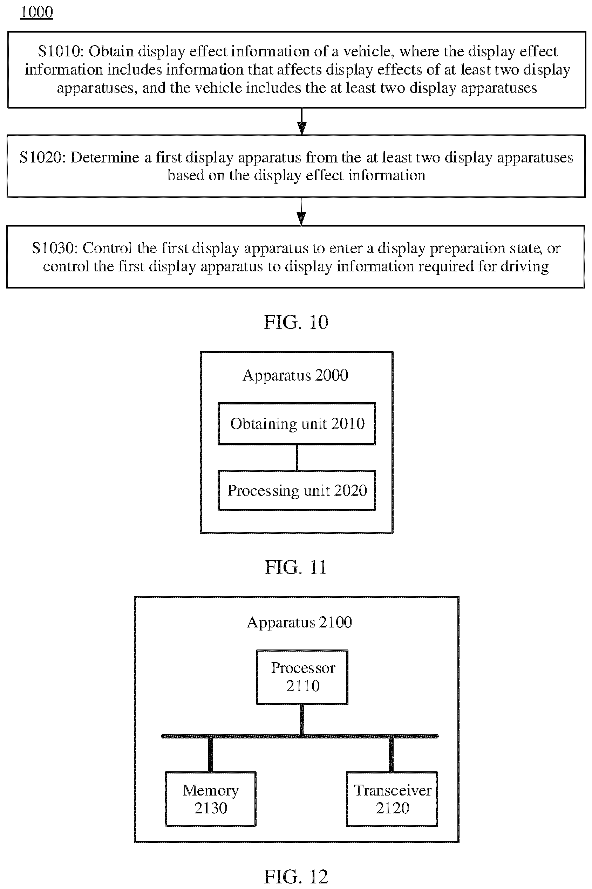

FIG. 10 is a schematic flowchart of a method for display apparatus control according to an embodiment of this application. The method 1000 may be applied to the scenario shown in FIG. 1, or may be applied to the vehicle 100 shown in FIG. 2. The method may also be performed by the system shown in FIG. 3. Specifically, the method 1000 may be performed by the pre-determining module in FIG. 3, or may be performed by the effect determining module in FIG. 3. This is not specifically limited in this embodiment of this application. The method 1000 includes the following steps.

S1010: Obtain display effect information of a vehicle, where the display effect information includes information that affects display effects of at least two display apparatuses, and the vehicle includes the at least two display apparatuses.

Specifically, the vehicle may be the vehicle 100 in the foregoing embodiment. The vehicle may be traveling, or may be in a just-on state, or may be in a stopped state. This is not specifically limited in this embodiment of this application. The display effect information may include the environment information and real-time state information of the vehicle in the foregoing embodiments. Alternatively, the display effect information may include a corresponding parameter determined based on the environment information and the real-time state information of the vehicle in the foregoing embodiments. For example, the display effect information may include a current-weather-condition parameter determined based on a current weather condition, or road surface flatness determined based on a road surface condition.

For example, the at least two display apparatuses include but are not limited to: a C-HUD, a W-HUD, an AR-HUD, various vehicle-mounted projection lights, various vehicle-mounted displays, and various human-machine interaction interfaces.

S1020: Determine a first display apparatus from the at least two display apparatuses based on the display effect information.

For example, the first display apparatus is determined from the at least two display apparatuses based on one piece of information in the display effect information; or the first display apparatus may be determined from the at least two display apparatuses based on the first eigenvalue and/or the second eigenvalue in the method 500 or the like, where the first eigenvalue and/or the second eigenvalue are/is determined based on the display effect information.

Specifically, for a method for determining the first display apparatus from the at least two display apparatuses based on the display effect information, refer to the descriptions in the foregoing embodiment. Details are not described herein again.

S1030: Control the first display apparatus to enter a display preparation state, or control the first display apparatus to display information required for driving.

In some possible implementations, after the first display apparatus is determined, the first display apparatus is controlled to enter the display preparation state.

In some possible implementations, before the first display apparatus is determined, the first display apparatus is already in the display preparation state. In this case, when the first display apparatus is determined, the first display apparatus is controlled to display the information required for driving.

Specifically, for a method for controlling the first display apparatus to enter the display preparation state, or controlling the first display apparatus to display the information required for driving, refer to the descriptions in the foregoing embodiments. Details are not described herein again.

According to the method for display apparatus control provided in this embodiment of this application, an apparatus for displaying the information required for driving can be determined based on information about an ambient environment of the vehicle and vehicle driving status information, so as to control the apparatus to display the information required for driving or control the apparatus to prepare for display. This improves comfort of a driver and safety in a driving process.

The methods provided in embodiments of this application are described above in detail with reference to FIG. 4 to FIG. 10. Reference is made to corresponding FIG. 11 and FIG. 12 in the following. Therefore, for content that is not described in detail, refer to the foregoing method embodiments. For brevity, details are not described herein again.

FIG. 11 is a block diagram of an apparatus 2000 for display apparatus control according to an embodiment of this application. The apparatus 2000 includes an obtaining unit 2010 and a processing unit 2020. The obtaining unit 2010 may further implement a corresponding communication function, and the processing unit 2020 is configured to perform data processing.

Optionally, the apparatus 2000 may further include a storage unit. The storage unit may be configured to store instructions and/or data. The processing unit 2020 may read the instructions and/or the data in the storage unit, so that the apparatus implements the foregoing method embodiments.

The apparatus 2000 may include units configured to perform the methods in FIG. 4 to FIG. 6, FIG. 8, and FIG. 10. In addition, the units in the apparatus 2000 and the foregoing other operations and/or functions are separately used to implement corresponding procedures in the method embodiments in FIG. 4 to FIG. 6, FIG. 8, and FIG. 10.

When the apparatus 2000 is configured to perform the method 1000 in FIG. 10, the obtaining unit 2010 may be configured to perform S1010 in the method 1000, and the processing unit 2020 may be configured to perform S1020 and S1030 in the method 1000.

Specifically, the apparatus 2000 includes: an obtaining unit 2010, configured to obtain display effect information of a vehicle, where the display effect information includes information that affects display effects of at least two display apparatuses, and the vehicle includes the at least two display apparatuses; and a processing unit 2020, configured to: determine a first display apparatus from the at least two display apparatuses based on the display effect information; and control the first display apparatus to enter a display preparation state, or control the first display apparatus to display information required for driving.

In some possible implementations, the processing unit 2020 is further configured to: determine a display effect coefficient of the first display apparatus based on the display effect information, where the display effect coefficient indicates a degree of impact of the display effect information on a display effect of the first display apparatus; and determine the first display apparatus from the at least two display apparatuses when the display effect coefficient is less than or equal to a first threshold.

The display effect coefficient may be a dimensionless quantity. For example, the first threshold may be 0.5, 0.6, or another value.

In some possible implementations, the first display apparatus is a vehicle-mounted projection apparatus, the display effect information includes obstacle distance information, the obstacle distance information indicates a distance between an obstacle in front of the vehicle and the vehicle, and the obtaining unit 2010 is further configured to: obtain head posture information of a driver of the vehicle; and the processing unit 2020 is further configured to: determine a projectable interval based on the head posture information and the obstacle distance information, where the projectable interval indicates a visible range of the driver; and control a second display apparatus to display the information required for driving when the projectable interval is less than a projection requirement interval, where the at least two display apparatuses include the second display apparatus, and the projection requirement interval indicates an area required for displaying the information required for driving.

In some possible implementations, the processing unit 2020 is further configured to: determine an eye location of the driver based on the head posture information; determine a first location of a bonnet of the vehicle based on the eye location, where the first location of the bonnet is a highest location at which a line of sight of the driver is blocked by the bonnet of the vehicle; and determine a lower boundary of the projectable interval based on the eye location and the first location of the bonnet, and determine an upper boundary of the projectable interval based on the obstacle distance information.

In some possible implementations, the obtaining unit 2010 is further configured to: when the first display apparatus displays the information required for driving, obtain displayed content of the first display apparatus; and the processing unit 2020 is further configured to: determine a display effect value based on the displayed content, where the display effect value represents visual comfort of human eyes; and control a third display apparatus to display the information required for driving when the display effect value is less than or equal to a second threshold, where the at least two display apparatuses include the third display apparatus.

The display effect value may be a dimensionless quantity. For example, the second threshold may be 0.75, 0.8, or another value.

In some possible implementations, the processing unit 2020 is further configured to: determine whether first duration is greater than or equal to a third threshold, where the first duration is duration in which the display effect value is less than or equal to the second threshold; and control the third display apparatus to display the information required for driving when the first duration is greater than or equal to the third threshold.

For example, the third threshold may be 5 seconds, 10 seconds, or another value.

In some possible implementations, the processing unit 2020 is further configured to notify the driver that switching to the third display apparatus is about to perform and/or is performed to display the information required for driving.

In some possible implementations, the processing unit 2020 is further configured to notify the driver that the display effect value is less than or equal to the second threshold.

In some possible implementations, the processing unit 2020 is further configured to after controlling the third display apparatus to display the information required for driving, control the first display apparatus to display the information required for driving.

In some possible implementations, the obtaining unit 2010 is further configured to obtain information about an ambient environment of the vehicle; and the processing unit 2020 is further configured to determine the display effect information based on the information about the ambient environment, where the information about the ambient environment includes at least one of the following: a luminous intensity, a road surface condition, a road scenario, a current weather condition, an obstacle location, and a distance between an obstacle and the vehicle.

In some possible implementations, the first display apparatus includes at least one of the following: a head-up display HUD, a vehicle-mounted projection light, or a vehicle-mounted display.

It should be understood that unit division of the foregoing apparatus is merely logical function division. During actual implementation, all or some of the units may be integrated into one physical entity, or may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units in the apparatus. The processor is, for example, a general-purpose processor, for example, a CPU or a microprocessor, the memory is a memory inside the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between components in the circuit. For another example, in another implementation, the hardware circuit may be implemented by using a PLD. An FPGA is used as an example. The circuit may include a large quantity of logic gate circuits, and a connection relationship between the logic gate circuits is configured according to a configuration file, to implement the functions of some or all of the foregoing units. All units of the foregoing apparatuses may be implemented in a form of software invoked by the processor, or all units may be implemented in a form of a hardware circuit, or some units may be implemented in a form of software invoked by the processor, and a remaining part may be implemented in a form of a hardware circuit.

In this embodiment of this application, the processor is a circuit having a signal processing capability. In an implementation, the processor may be a circuit having a capability of instruction reading and running, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the circuit may be a hardware circuit designed for artificial intelligence, and may be understood as an ASIC, for example, an NPU, a TPU, or a DPU.

It can be learned that each unit in the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, the units may be integrated together and implemented in a form of a system-on-a-chip (system-on-a-chip, SOC). The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

In a specific implementation process, the operations performed by the obtaining unit 2010 and the processing unit 2020 may be performed by a same processor, or may be performed by different processors, for example, separately performed by a plurality of processors. In an example, one or more processors may be connected to one or more sensors in the sensing system 120 in FIG. 2, to obtain the environment information from the one or more sensors and perform processing. In another example, the one or more processors may be further connected to one or more display apparatuses in the display apparatus 130, to control turn-on and/or turn-off of the display apparatuses and control switching between the display apparatuses. For example, in a specific implementation process, the one or more processors may be processors disposed in a head unit, or may be processors disposed in another vehicle-mounted terminal. For example, in a specific implementation process, the apparatus 2000 may be a chip disposed in a head unit or another vehicle-mounted terminal. For example, in a specific implementation process, the apparatus 2000 may be the computing platform 150 shown in FIG. 2 that is disposed in the vehicle.

An embodiment of this application further provides an apparatus. The apparatus includes a processing unit and a storage unit. The storage unit is configured to store instructions. The processing unit executes the instructions stored in the storage unit, so that the apparatus performs the methods or the steps performed in the foregoing embodiments.

Optionally, in a specific implementation process, the processing unit includes the processors 151 to 15n shown in FIG. 2. The obtaining unit may be a sensor in the sensing system 120 shown in FIG. 2, or may be the processors 151 to 15n shown in FIG. 2.

FIG. 12 is a block diagram of an apparatus 2100 for display apparatus control according to an embodiment of this application. The apparatus 2100 for display apparatus control shown in FIG. 12 may include a processor 2110, a transceiver 2120, and a memory 2130. The processor 2110, the transceiver 2120, and the memory 2130 are connected by an internal connection path. The memory 2130 is configured to store instructions. The processor 2110 is configured to execute the instructions stored in the memory 2130, so that the transceiver 2120 receives/sends some parameters. Optionally, the memory 2130 may be coupled to the processor 2110 through an interface, or may be integrated with the processor 2110. An example of the apparatus 2100 is a chip. Another example of the apparatus 2100 is a computing device.

It should be noted that the transceiver 2120 may include but is not limited to a transceiver apparatus like an input/output interface (input/output interface), to implement communication between the apparatus 2100 and another device or a communication network.

In an implementation process, the steps in the foregoing methods can be performed by using a hardware integrated logic circuit in the processor 2110, or by using instructions in a form of software. The methods disclosed with reference to embodiments of this application may be directly performed by a hardware processor, or may be performed by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 2130, and the processor 2110 reads information in the memory 2130 and completes the steps in the foregoing methods in combination with hardware of the processor. To avoid repetition, details are not described herein again.

It should be further understood that, in this embodiment of this application, a memory may include a read-only memory and a random access memory, and provides instructions and data to the processor. A part of the processor may further include a non-volatile random access memory. For example, the processor may further store information of a device type.

An embodiment of this application further provides a computer program product. The computer program product includes computer program code, and when the computer program code is run on a computer, the computer is enabled to perform the foregoing methods.

An embodiment of this application further provides a computer-readable storage medium. The computer-readable medium stores program code. When the computer program code is run on a computer, the computer is enabled to perform any one of the methods in FIG. 4 to FIG. 6, FIG. 8, and FIG. 10.

An embodiment of this application further provides a chip, including at least one processor and a memory. The at least one processor is coupled to the memory, and is configured to read and execute instructions in the memory, to perform any one of the methods in FIG. 4 to FIG. 6, FIG. 8, and FIG. 10.

In a specific implementation process, the memory may be configured to store instructions used to control the foregoing obtaining unit 2010 and/or processing unit 2020, and the at least one processor may be configured to perform the operations performed by the foregoing obtaining unit 2010 and/or processing unit 2020. For example, at least one processor may be connected to the one or more sensors in the sensing system 120 in FIG. 2, to obtain the environment information from the one or more sensors and perform processing. Alternatively, the at least one processor may be further connected to one or more display apparatuses in the display apparatus 130, to control turn-on and/or turn-off of the display apparatuses and control switching between the display apparatuses. In a specific implementation process, the apparatus 2000 may be the chip, or the apparatus 2100 may be the chip. In some possible implementations, the chip may be the computing platform 150 disposed in the vehicle in FIG. 2. For example, the chip may be a chip disposed in a head unit or another vehicle-mounted terminal.

An embodiment of this application further provides a vehicle, including at least one processor and a memory. The at least one processor is coupled to the memory, and is configured to read and execute instructions in the memory, to perform any one of the methods in FIG. 4 to FIG. 6, FIG. 8, and FIG. 10.

In a specific implementation process, the memory may be configured to store instructions used to control the foregoing obtaining unit 2010 and/or processing unit 2020, and the at least one processor may be configured to perform the operations performed by the foregoing obtaining unit 2010 and/or processing unit 2020. For example, at least one processor may be connected to the one or more sensors in the sensing system 120 in FIG. 2, to obtain the environment information from the one or more sensors and perform processing. Alternatively, the at least one processor may be further connected to one or more display apparatuses in the display apparatus 130, to control turn-on and/or turn-off of the display apparatuses and control switching between the display apparatuses. In a specific implementation process, the vehicle may further include one or more display apparatuses in the display apparatus 130 in FIG. 2. In a specific implementation process, the vehicle may further include the foregoing apparatus 2000, or include the foregoing apparatus 2100, or include the chip in the foregoing embodiments.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are used to give an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "relevant (corresponding, relevant)" and "corresponding (corresponding)" may sometimes be interchangeably used. It should be noted that meanings expressed by the two words are consistent when a difference between the two words is not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

Reference to "one embodiment", "some embodiments", or the like described in this specification means that one or more embodiments of this application include a particular feature, structure, or characteristic described in combination with the embodiment. Therefore, in this specification, statements, such as "in an embodiment", "in some embodiments", "in some other embodiments", and "in other embodiments", that appear at different places do not necessarily mean a same embodiment. Instead, the statements mean "one or more but not all of the embodiments", unless otherwise specifically emphasized. Terms "include", "contain", "have", and variants of the terms all mean "include but are not limited to", unless otherwise specifically emphasized.

In embodiments of this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" usually indicates an "or" relationship between associated objects. "At least one of the following items (pieces)" or a similar expression thereof refers to any combination of the items, including any combination of singular items (pieces) or plural items (pieces). For example, at least one item (piece) of a, b, or c may indicate: a, b, c, a and b, a and c, b and c, or a, b, and c, where a, b, and c may be singular or plural.

A person of ordinary skill in the art may be aware that the units and algorithm steps described with reference to examples in embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions of the embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

## Claims

1. A method for display apparatus control, comprising:
obtaining (S1010) display effect information of a vehicle, wherein the display effect information comprises information that affects display effects of at least two display apparatuses, and the vehicle comprises the at least two display apparatuses;
determining (S1020) a first display apparatus from the at least two display apparatuses based on the display effect information; and
controlling (S1030) the first display apparatus to enter a display preparation state, or controlling the first display apparatus to display information required for driving;
**characterised in that** the determining a first display apparatus from the at least two display apparatuses based on the display effect information comprises:
determining a display effect coefficient of the first display apparatus based on the display effect information, wherein the display effect coefficient indicates a degree of impact of the display effect information on a display effect of the first display apparatus; and
determining the first display apparatus from the at least two display apparatuses when the display effect coefficient is less than or equal to a first threshold.

2. The method according to claim 1, wherein the first display apparatus is a vehicle-mounted projection apparatus, the display effect information comprises obstacle distance information, the obstacle distance information indicates a distance between an obstacle in front of the vehicle and the vehicle, and the method further comprises:
obtaining head posture information of a driver of the vehicle;
determining a projectable interval based on the head posture information and the obstacle distance information, wherein the projectable interval indicates a visible range of the driver; and
controlling a second display apparatus to display the information required for driving when the projectable interval is less than a projection requirement interval, wherein the at least two display apparatuses comprise the second display apparatus, and the projection requirement interval indicates an area required for displaying the information required for driving.

3. The method according to claim 2, wherein the determining a projectable interval based on the head posture information and the obstacle distance information comprises:
determining an eye location of the driver based on the head posture information;
determining a first location of a bonnet of the vehicle based on the eye location, wherein the first location of the bonnet is a highest location at which a line of sight of the driver is blocked by the bonnet of the vehicle; and
determining a lower boundary of the projectable interval based on the eye location and the first location of the bonnet, and determining an upper boundary of the projectable interval based on the obstacle distance information.

4. The method according to any one of claims 1 to 3, wherein the method further comprises:
when the first display apparatus displays the information required for driving, obtaining displayed content of the first display apparatus;
determining a display effect value based on the displayed content, wherein the display effect value represents visual comfort of human eyes; and
controlling a third display apparatus to display the information required for driving when the display effect value is less than or equal to a second threshold, wherein the at least two display apparatuses comprise the third display apparatus.

5. The method according to claim 4, wherein the method further comprises:
determining whether first duration is greater than or equal to a third threshold, wherein the first duration is duration in which the display effect value is less than or equal to the second threshold; and
the controlling a third display apparatus to display the information required for driving when the display effect value is less than or equal to a second threshold comprises:
controlling the third display apparatus to display the information required for driving when the first duration is greater than or equal to the third threshold.

6. The method according to claim 4 or 5, wherein the method further comprises:
notifying the driver that switching to the third display apparatus is about to perform and/or is performed to display the information required for driving.

7. An apparatus for display apparatus control, comprising:
an obtaining unit (2010), configured to obtain display effect information of a vehicle, wherein the display effect information comprises information that affects display effects of at least two display apparatuses, and the vehicle comprises the at least two display apparatuses; and
a processing unit (2020), configured to: determine a first display apparatus from the at least two display apparatuses based on the display effect information; and control the first display apparatus to enter a display preparation state, or control the first display apparatus to display information required for driving; and **characterised in that** the processing unit is further configured to:
determine a display effect coefficient of the first display apparatus based on the display effect information, wherein the display effect coefficient indicates a degree of impact of the display effect information on a display effect of the first display apparatus; and
determine the first display apparatus from the at least two display apparatuses when the display effect coefficient is less than or equal to a first threshold.

8. The apparatus according to claim 7, wherein the first display apparatus is a vehicle-mounted projection apparatus, the display effect information comprises obstacle distance information, the obstacle distance information indicates a distance between an obstacle in front of the vehicle and the vehicle, and the obtaining unit is further configured to:
obtain head posture information of a driver of the vehicle; and
the processing unit is further configured to: determine a projectable interval based on the head posture information and the obstacle distance information, wherein the projectable interval indicates a visible range of the driver; and control a second display apparatus to display the information required for driving when the projectable interval is less than a projection requirement interval, wherein the at least two display apparatuses comprise the second display apparatus, and the projection requirement interval indicates an area required for displaying the information required for driving.

9. The apparatus according to claim 8, wherein the processing unit is further configured to:
determine an eye location of the driver based on the head posture information;
determine a first location of a bonnet of the vehicle based on the eye location, wherein the first location of the bonnet is a highest location at which a line of sight of the driver is blocked by the bonnet of the vehicle; and
determine a lower boundary of the projectable interval based on the eye location and the first location of the bonnet, and determine an upper boundary of the projectable interval based on the obstacle distance information.

10. The apparatus according to any one of claims 7 to 9, wherein the obtaining unit is further configured to:
when the first display apparatus displays the information required for driving, obtain displayed content of the first display apparatus; and
the processing unit is further configured to: determine a display effect value based on the displayed content, wherein the display effect value represents visual comfort of human eyes; and control a third display apparatus to display the information required for driving when the display effect value is less than or equal to a second threshold, wherein the at least two display apparatuses comprise the third display apparatus.

11. The apparatus according to claim 10, wherein the processing unit is further configured to:
determine whether first duration is greater than or equal to a third threshold, wherein the first duration is duration in which the display effect value is less than or equal to the second threshold; and
control the third display apparatus to display the information required for driving when the first duration is greater than or equal to the third threshold.

12. The apparatus according to claim 10 or 11, wherein the processing unit is further configured to:
notify the driver that switching to the third display apparatus is about to perform and/or is performed to display the information required for driving.

13. A computer-readable storage medium, wherein the computer-readable storage medium stores a computer program; and when the computer program is executed by a computer, the method according to any one of claims 1 to 6 is performed.

## Patentansprüche

1. Verfahren zur Anzeigevorrichtungssteuerung, umfassend:
Erlangen (S1010) von Anzeigeeffektinformationen eines Fahrzeugs, wobei die Anzeigeeffektinformationen Informationen umfassen, die Anzeigeeffekte von mindestens zwei Anzeigevorrichtungen beeinflussen, und das Fahrzeug die mindestens zwei Anzeigevorrichtungen umfasst;
Bestimmen (S1020) einer ersten Anzeigevorrichtung aus den mindestens zwei Anzeigevorrichtungen basierend auf den Anzeigeeffektinformationen; und
Steuern (S1030) der ersten Anzeigevorrichtung, um in einen Anzeigevorbereitungszustand einzutreten, oder Steuern der ersten Anzeigevorrichtung, um zum Fahren erforderliche Informationen anzuzeigen;
**dadurch gekennzeichnet, dass** das Bestimmen einer ersten Anzeigevorrichtung aus den mindestens zwei Anzeigevorrichtungen basierend auf den Anzeigeeffektinformationen Folgendes umfasst:
Bestimmen eines Anzeigeeffektkoeffizienten der ersten Anzeigevorrichtung basierend auf den Anzeigeeffektinformationen, wobei der Anzeigeeffektkoeffizient einen Auswirkungsgrad der Anzeigeeffektinformationen auf einen Anzeigeeffekt der ersten Anzeigevorrichtung angibt; und
Bestimmen der ersten Anzeigevorrichtung aus den mindestens zwei Anzeigevorrichtungen, wenn der Anzeigeeffektkoeffizient kleiner als oder gleich einem ersten Schwellenwert ist.

2. Verfahren nach Anspruch 1, wobei die erste Anzeigevorrichtung eine fahrzeugmontierte Projektionsvorrichtung ist, die Anzeigeeffektinformationen Hindernisabstandsinformationen umfassen, die Hindernisabstandsinformationen einen Abstand zwischen einem Hindernis vor dem Fahrzeug und dem Fahrzeug angeben und das Verfahren ferner Folgendes umfasst:
Erlangen von Kopfhaltungsinformationen eines Fahrers des Fahrzeugs;
Bestimmen eines projizierbaren Intervalls basierend auf den Kopfhaltungsinformationen und den Hindernisabstandsinformationen, wobei das projizierbare Intervall einen Sichtbereich des Fahrers angibt; und
Steuern einer zweiten Anzeigevorrichtung, um die zum Fahren erforderlichen Informationen anzuzeigen, wenn das projizierbare Intervall kleiner als ein Projektionsanforderungsintervall ist,
wobei die mindestens zwei Anzeigevorrichtungen die zweite Anzeigevorrichtung umfassen und das Projektionsanforderungsintervall einen Bereich angibt, der zum Anzeigen der zum Fahren erforderlichen Informationen erforderlich ist.

3. Verfahren nach Anspruch 2, wobei das Bestimmen eines projizierbaren Intervalls basierend auf den Kopfhaltungsinformationen und den Hindernisabstandsinformationen Folgendes umfasst:
Bestimmen einer Augenposition des Fahrers basierend auf den Kopfhaltungsinformationen;
Bestimmen einer ersten Position einer Motorhaube des Fahrzeugs basierend auf der Augenposition, wobei die erste Position der Motorhaube eine höchste Position ist, an der eine Sichtlinie des Fahrers durch die Motorhaube des Fahrzeugs blockiert ist; und
Bestimmen einer unteren Grenze des projizierbaren Intervalls basierend auf der Augenposition und der ersten Position der Motorhaube und Bestimmen einer oberen Grenze des projizierbaren Intervalls basierend auf den Hindernisabstandsinformationen.

4. Verfahren nach einem der Ansprüche 1 bis 3, wobei das Verfahren ferner Folgendes umfasst:
wenn die erste Anzeigevorrichtung die zum Fahren erforderlichen Informationen anzeigt, Erlangen von angezeigtem Inhalt der ersten Anzeigevorrichtung;
Bestimmen eines Anzeigeeffektwerts basierend auf dem angezeigten Inhalt, wobei der Anzeigeeffektwert den Sehkomfort menschlicher Augen darstellt; und
Steuern einer dritten Anzeigevorrichtung, um die zum Fahren erforderlichen Informationen anzuzeigen, wenn der Anzeigeeffektwert kleiner als oder gleich einem zweiten Schwellenwert ist, wobei die mindestens zwei Anzeigevorrichtungen die dritte Anzeigevorrichtung umfassen.

5. Verfahren nach Anspruch 4, wobei das Verfahren ferner Folgendes umfasst:
Bestimmen, ob die erste Dauer größer als oder gleich einem dritten Schwellenwert ist, wobei die erste Dauer die Dauer ist,
in welcher der Anzeigeeffektwert kleiner als oder gleich dem zweiten Schwellenwert ist; und
wobei das Steuern einer dritten Anzeigevorrichtung, um die zum Fahren erforderlichen Informationen anzuzeigen, wenn der Anzeigeeffektwert kleiner als oder gleich einem zweiten Schwellenwert ist, Folgendes umfasst:
Steuern der dritten Anzeigevorrichtung, um die zum Fahren erforderliche Informationen anzuzeigen, wenn die erste Dauer größer als oder gleich dem dritten Schwellenwert ist.

6. Verfahren nach Anspruch 4 oder 5, wobei das Verfahren ferner Folgendes umfasst:
Benachrichtigen des Fahrers darüber, dass ein Wechseln zu der dritten Anzeigevorrichtung, um die zum Fahren erforderlichen Informationen anzuzeigen, unmittelbar durchgeführt und/oder bereits durchgeführt wird.

7. Vorrichtung zur Anzeigevorrichtungssteuerung, umfassend:
eine Erlangungseinheit (2010), die dazu konfiguriert ist, Anzeigeeffektinformationen eines Fahrzeugs zu erlangen, wobei die Anzeigeeffektinformationen Informationen umfassen, die Anzeigeeffekte von mindestens zwei Anzeigevorrichtungen beeinflussen, und das Fahrzeug die mindestens zwei Anzeigevorrichtungen umfasst; und
eine Verarbeitungseinheit (2020), die zu Folgendem konfiguriert ist: Bestimmen einer ersten Anzeigevorrichtung aus den mindestens zwei Anzeigevorrichtungen basierend auf den Anzeigeeffektinformationen; und Steuern, dass die erste Anzeigevorrichtung in einen Anzeigevorbereitungszustand eintritt, oder Steuern der ersten Anzeigevorrichtung, um zum Fahren erforderliche Informationen anzuzeigen; und **dadurch gekennzeichnet, dass** die Verarbeitungseinheit ferner zu Folgendem konfiguriert ist:
Bestimmen eines Anzeigeeffektkoeffizienten der ersten Anzeigevorrichtung basierend auf den Anzeigeeffektinformationen, wobei der Anzeigeeffektkoeffizient einen Auswirkungsgrad der Anzeigeeffektinformationen auf einen Anzeigeeffekt der ersten Anzeigevorrichtung angibt; und
Bestimmen der ersten Anzeigevorrichtung aus den mindestens zwei Anzeigevorrichtungen, wenn der Anzeigeeffektkoeffizient kleiner als oder gleich einem ersten Schwellenwert ist.

8. Vorrichtung nach Anspruch 7, wobei die erste Anzeigevorrichtung eine fahrzeugmontierte Projektionsvorrichtung ist, die Anzeigeeffektinformationen Hindernisabstandsinformationen umfassen, die Hindernisabstandsinformationen einen Abstand zwischen einem Hindernis vor dem Fahrzeug und dem Fahrzeug angeben und die Erlangungseinheit ferner zu Folgendem konfiguriert ist:
Erlangen von Kopfhaltungsinformationen eines Fahrers des Fahrzeugs; und
die Verarbeitungseinheit ferner zu Folgendem konfiguriert ist:
Bestimmen eines projizierbaren Intervalls basierend auf den Kopfhaltungsinformationen und den Hindernisabstandsinformationen, wobei das projizierbare Intervall einen sichtbaren Bereich des Fahrers angibt; und
Steuern einer zweiten Anzeigevorrichtung, um die zum Fahren erforderlichen Informationen anzuzeigen, wenn das projizierbare Intervall kleiner als ein Projektionsanforderungsintervall ist, wobei die mindestens zwei Anzeigevorrichtungen die zweite Anzeigevorrichtung umfassen und das Projektionsanforderungsintervall einen Bereich angibt, der zum Anzeigen der zum Fahren erforderlichen Informationen erforderlich ist.

9. Vorrichtung nach Anspruch 8, wobei die Verarbeitungseinheit ferner zu Folgendem konfiguriert ist:
Bestimmen einer Augenposition des Fahrers basierend auf den Kopfhaltungsinformationen;
Bestimmen einer ersten Position einer Motorhaube des Fahrzeugs basierend auf der Augenposition, wobei die erste Position der Motorhaube eine höchste Position ist, an der eine Sichtlinie des Fahrers durch die Motorhaube des Fahrzeugs blockiert ist; und
Bestimmen einer unteren Grenze des projizierbaren Intervalls basierend auf der Augenposition und der ersten Position der Motorhaube und Bestimmen einer oberen Grenze des projizierbaren Intervalls basierend auf den Hindernisabstandsinformationen.

10. Vorrichtung nach einem der Ansprüche 7 bis 9, wobei die Erlangungseinheit ferner zu Folgendem konfiguriert ist:
wenn die erste Anzeigevorrichtung die zum Fahren erforderlichen Informationen anzeigt, Erlangen von angezeigtem Inhalt der ersten Anzeigevorrichtung; und
wobei die Verarbeitungseinheit ferner zu Folgendem konfiguriert ist: Bestimmen eines Anzeigeeffektwerts basierend auf dem angezeigten Inhalt, wobei der Anzeigeeffektwert den Sehkomfort menschlicher Augen darstellt; und Steuern einer dritten Anzeigevorrichtung, um die zum Fahren erforderlichen Informationen anzuzeigen, wenn der Anzeigeeffektwert kleiner als oder gleich einem zweiten Schwellenwert ist, wobei die mindestens zwei Anzeigevorrichtungen die dritte Anzeigevorrichtung umfassen.

11. Vorrichtung nach Anspruch 10, wobei die Verarbeitungseinheit ferner zu Folgendem konfiguriert ist:
Bestimmen, ob die erste Dauer größer als oder gleich einem dritten Schwellenwert ist, wobei die erste Dauer die Dauer ist, in welcher der Anzeigeeffektwert kleiner als oder gleich dem zweiten Schwellenwert ist; und
Steuern der dritten Anzeigevorrichtung, um die zum Fahren erforderlichen Informationen anzuzeigen, wenn die erste Dauer größer als oder gleich dem dritten Schwellenwert ist.

12. Vorrichtung nach Anspruch 10 oder 11, wobei die Verarbeitungseinheit ferner zu Folgendem konfiguriert ist:
Benachrichtigen des Fahrers darüber, dass ein Wechseln zu der dritten Anzeigevorrichtung, um die zum Fahren erforderlichen Informationen anzuzeigen, unmittelbar durchgeführt und/oder bereits durchgeführt wird.

13. Computerlesbares Speichermedium, wobei das computerlesbare Speichermedium ein Computerprogramm speichert; und, wenn das Computerprogramm durch einen Computer ausgeführt wird, das Verfahren nach einem der Ansprüche 1 bis 6 durchgeführt wird.

## Revendications

1. Procédé de commande d'appareil d'affichage, comprenant :
l'obtention (S1010) d'informations d'effet d'affichage d'un véhicule, dans lequel les informations d'effet d'affichage comprennent des informations qui affectent les effets d'affichage d'au moins deux appareils d'affichage, et le véhicule comprend les au moins deux appareils d'affichage ;
la détermination (S1020) d'un premier appareil d'affichage à partir des au moins deux appareils d'affichage sur la base des informations d'effet d'affichage ; et
la commande (S1030) du premier appareil d'affichage pour entrer dans un état de préparation d'affichage, ou la commande du premier appareil d'affichage pour afficher des informations nécessaires à la conduite ;
**caractérisé en ce que** la détermination d'un premier appareil d'affichage à partir des au moins deux appareils d'affichage,
sur la base des informations d'effet d'affichage, comprend :
la détermination d'un coefficient d'effet d'affichage du premier appareil d'affichage sur la base des informations d'effet d'affichage, dans lequel le coefficient d'effet d'affichage indique un degré d'impact des informations d'effet d'affichage sur un effet d'affichage du premier appareil d'affichage ; et
la détermination du premier appareil d'affichage à partir des au moins deux appareils d'affichage lorsque le coefficient d'effet d'affichage est inférieur ou égal à un premier seuil.

2. Procédé selon la revendication 1, dans lequel le premier appareil d'affichage est un appareil de projection monté sur véhicule, les informations d'effet d'affichage comprennent des informations de distance d'obstacle, les informations de distance d'obstacle indiquent une distance entre un obstacle situé devant le véhicule et le véhicule, et le procédé comprend en outre :
l'obtention d'informations de posture de tête d'un conducteur du véhicule ;
la détermination d'un intervalle pouvant être projeté sur la base des informations de posture de tête et des informations de distance d'obstacle, dans lequel l'intervalle pouvant être projeté indique une portée visuelle du conducteur ; et
la commande d'un deuxième appareil d'affichage pour afficher les informations nécessaires à la conduite lorsque l'intervalle pouvant être projeté est inférieur à un intervalle de projection nécessaire, dans lequel les au moins deux appareils d'affichage comprennent le deuxième appareil d'affichage, et l'intervalle de projection nécessaire indique une zone nécessaire pour l'affichage des informations nécessaires à la conduite.

3. Procédé selon la revendication 2, dans lequel la détermination d'un intervalle pouvant être projeté sur la base des informations de posture de tête et des informations de distance d'obstacle comprend :
la détermination d'un emplacement des yeux du conducteur sur la base des informations de posture de tête ;
la détermination d'un premier emplacement d'un capot du véhicule sur la base de l'emplacement des yeux, dans lequel le premier emplacement du capot est un emplacement le plus haut au niveau duquel le capot du véhicule bloque un champ de vision du conducteur ; et
la détermination d'une limite inférieure de l'intervalle pouvant être projeté sur la base de l'emplacement des yeux et du premier emplacement du capot, et la détermination d'une limite supérieure de l'intervalle pouvant être projeté sur la base des informations de distance d'obstacle.

4. Procédé selon l'une quelconque des revendications 1 à 3, dans lequel le procédé comprend en outre :
lorsque le premier appareil d'affichage affiche les informations nécessaires à la conduite, l'obtention du contenu affiché du premier appareil d'affichage ;
la détermination d'une valeur d'effet d'affichage sur la base du contenu affiché, dans lequel la valeur d'effet d'affichage représente le confort visuel des yeux humains ; et
la commande d'un troisième appareil d'affichage pour afficher les informations nécessaires à la conduite lorsque la valeur d'effet d'affichage est inférieure ou égale à un deuxième seuil, dans lequel les au moins deux appareils d'affichage comprennent le troisième appareil d'affichage.

5. Procédé selon la revendication 4, dans lequel le procédé comprend en outre :
le fait de déterminer si la première durée est supérieure ou égale à un troisième seuil, dans lequel la première durée est une durée pendant laquelle la valeur d'effet d'affichage est inférieure ou égale au deuxième seuil ; et
la commande d'un troisième appareil d'affichage pour afficher les informations nécessaires à la conduite lorsque la valeur d'effet d'affichage est inférieure ou égale à un deuxième seuil comprend :
la commande du troisième appareil d'affichage pour afficher les informations nécessaires à la conduite lorsque la première durée est supérieure ou égale au troisième seuil.

6. Procédé selon la revendication 4 ou 5, dans lequel le procédé comprend en outre :
le fait de notifier au conducteur que le passage au troisième appareil d'affichage est sur le point d'être réalisé et/ou est en train d'être réalisé pour afficher les informations nécessaires à la conduite.

7. Appareil de commande d'appareil d'affichage, comprenant :
une unité d'obtention (2010), configurée pour obtenir des informations d'effet d'affichage d'un véhicule, dans lequel les informations d'effet d'affichage comprennent des informations qui affectent les effets d'affichage d'au moins deux appareils d'affichage, et le véhicule comprend les au moins deux appareils d'affichage ; et
une unité de traitement (2020), configurée pour : déterminer un premier appareil d'affichage à partir des au moins deux appareils d'affichage sur la base des informations d'effet d'affichage ; et commander le premier appareil d'affichage pour entrer dans un état de préparation d'affichage, ou commander le premier appareil d'affichage pour afficher des informations nécessaires à la conduite ; et **caractérisé en ce que** l'unité de traitement est en outre configurée pour :
déterminer un coefficient d'effet d'affichage du premier appareil d'affichage sur la base des informations d'effet d'affichage, dans lequel le coefficient d'effet d'affichage indique un degré d'impact des informations d'effet d'affichage sur un effet d'affichage du premier appareil d'affichage ; et
déterminer le premier appareil d'affichage à partir des au moins deux appareils d'affichage lorsque le coefficient d'effet d'affichage est inférieur ou égal à un premier seuil.

8. Appareil selon la revendication 7, dans lequel le premier appareil d'affichage est un appareil de projection monté sur véhicule, les informations d'effet d'affichage comprennent des informations de distance d'obstacle, les informations de distance d'obstacle indiquent une distance entre un obstacle situé devant le véhicule et le véhicule, et l'unité d'obtention est en outre configurée pour :
obtenir des informations de posture de tête d'un conducteur du véhicule ; et
l'unité de traitement est en outre configurée pour : déterminer un intervalle pouvant être projeté sur la base des informations de posture de tête et des informations de distance d'obstacle,
dans lequel l'intervalle pouvant être projeté indique une portée visuelle du conducteur ; et commander un deuxième appareil d'affichage pour afficher les informations nécessaires à la conduite lorsque l'intervalle pouvant être projeté est inférieur à un intervalle de projection nécessaire, dans lequel les au moins deux appareils d'affichage comprennent le deuxième appareil d'affichage, et l'intervalle de projection nécessaire indique une zone nécessaire pour l'affichage des informations nécessaires à la conduite.

9. Appareil selon la revendication 8, dans lequel l'unité de traitement est en outre configurée pour :
déterminer un emplacement des yeux du conducteur sur la base des informations de posture de tête ;
déterminer un premier emplacement d'un capot du véhicule sur la base de l'emplacement des yeux, dans lequel le premier emplacement du capot est un emplacement le plus haut au niveau duquel le capot du véhicule bloque un champ de vision du conducteur ; et
déterminer une limite inférieure de l'intervalle pouvant être projeté sur la base de l'emplacement des yeux et du premier emplacement du capot, et déterminer une limite supérieure de l'intervalle pouvant être projeté sur la base des informations de distance d'obstacle.

10. Appareil selon l'une quelconque des revendications 7 à 9, dans lequel l'unité d'obtention est en outre configurée pour :
lorsque le premier appareil d'affichage affiche les informations nécessaires à la conduite, obtenir un contenu affiché du premier appareil d'affichage ; et
l'unité de traitement est en outre configurée pour : déterminer une valeur d'effet d'affichage sur la base du contenu affiché, dans lequel la valeur d'effet d'affichage représente le confort visuel des yeux humains ; et commander un troisième appareil d'affichage pour afficher les informations nécessaires à la conduite lorsque la valeur d'effet d'affichage est inférieure ou égale à un deuxième seuil, dans lequel les au moins deux appareils d'affichage comprennent le troisième appareil d'affichage.

11. Appareil selon la revendication 10, dans lequel l'unité de traitement est en outre configurée pour :
déterminer si la première durée est supérieure ou égale à un troisième seuil, dans lequel la première durée est une durée pendant laquelle la valeur d'effet d'affichage est inférieure ou égale au deuxième seuil ; et
commander le troisième appareil d'affichage pour afficher les informations nécessaires à la conduite lorsque la première durée est supérieure ou égale au troisième seuil.

12. Appareil selon la revendication 10 ou 11, dans lequel l'unité de traitement est en outre configurée pour :
notifier au conducteur que le passage au troisième appareil d'affichage est sur le point d'être réalisé et/ou est en train d'être réalisé pour afficher les informations nécessaires à la conduite.

13. Support de stockage lisible par ordinateur, dans lequel le support de stockage lisible par ordinateur stocke un programme informatique ; et lorsque le programme informatique est exécuté par un ordinateur, le procédé selon l'une quelconque des revendications 1 à 6 est réalisé.
